(19) Europäisches Patentamt
European Patent Office
Office européen des brevets

(11) **EP 2 196 645 B1**

(12) **EUROPEAN PATENT SPECIFICATION**

(45) Date of publication and mention
of the grant of the patent:
**07.09.2011 Bulletin 2011/36**

(51) Int Cl.:
***F01N 3/022*** *(2006.01)*      ***B01D 46/24*** *(2006.01)*

(21) Application number: **10153622.5**

(22) Date of filing: **23.12.2008**

(54) **Honeycomb structured body**

Wabenstrukturkörper

Corps structuré en nid d'abeille

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.03.2008 PCT/JP2008/055455**
**24.03.2008 PCT/JP2008/055456**
**24.03.2008 PCT/JP2008/055458**
**24.03.2008 PCT/JP2008/055459**

(43) Date of publication of application:
**16.06.2010 Bulletin 2010/24**

(62) Document number(s) of the earlier application(s) in accordance with Art. 76 EPC:
**08291234.6 / 2 113 643**

(73) Proprietor: **IBIDEN CO., LTD.**
**Ogaki-shi, Gifu 503-8604 (JP)**

(72) Inventors:
• **Ohno, Kazushige**
**Gifu 501-0695 (JP)**
• **Ogyu, Kazutake**
**Gifu 501-0695 (JP)**
• **Ishikawa, Shigeharu**
**Gifu 501-0695 (JP)**

(74) Representative: **HOFFMANN EITLE**
**Patent- und Rechtsanwälte**
**Arabellastraße 4**
**81925 München (DE)**

(56) References cited:
**EP-A- 1 142 619      EP-A- 1 486 243**
**EP-A- 1 508 354      EP-A- 1 618 941**
**US-A1- 2005 247 038**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a honeycomb structured body.

BACKGROUND ART

In recent years, particulate matter (hereinafter, also referred to simply as particulate or PM) contained in exhaust gases discharged from internal combustion engines of vehicles such as buses and trucks, and construction machines have raised serious problems as contaminants harmful to the environment and the human body.
For this reason, various honeycomb structured bodies, which are made of porous ceramics, have been proposed as filters that capture particulate in exhaust gases and purify the exhaust gases.
As a honeycomb structured body of this kind, for example, a honeycomb structured body has been proposed in which, after a plurality of rectangular pillar-shaped honeycomb fired bodies have been combined with one another with an adhesive layer interposed therebetween, the combined honeycomb fired body undergoes a cutting process to be formed into a predetermined shape to manufacture the honeycomb structured body (for example, see Patent Document 1).
Further, a honeycomb structured body has been also proposed in which a plurality of honeycomb fired bodies, each of which is manufactured by preliminarily being extrusion-molded into a predetermined shape, are combined with one another with an adhesive layer interposed therebetween (for example, see Patent Document 2).
On a cross section perpendicular to a longitudinal direction of these honeycomb structured bodies, a honeycomb fired body having a rectangular shape in the cross section is located in the center portion of the honeycomb structured body. Honeycomb fired bodies having a smaller cross-sectional area than that of the honeycomb fired bodies located in the center portion are located in the peripheral portion of the honeycomb structured body.
Moreover, a honeycomb structured body having another structure has been proposed in which, on a cross section perpendicular to a longitudinal direction thereof, a honeycomb fired body having a rectangular shape in the cross section is located in the center portion of the honeycomb structured body, and a honeycomb fired body having a cross-sectional area larger than that of a honeycomb fired body located in the center portion are located in the peripheral portion of the honeycomb structured body(for example, see Patent Document 3).
Patent Document 1: WO 01/23069 A1
Patent Document 2: JP-A 2004-154718
Patent Document 3: WO 04/96414 A1

DISCLOSURE OF THE INVENTION

PROBLEMS TO BE SOLVED BY THE INVENTION

Upon using a honeycomb structured body as an exhaust-gas purifying filter, a high-temperature exhaust gas discharged from an internal combustion engine flows into cells of the honeycomb structured body. At this time, since much heat is applied to a honeycomb fired body located in the center portion, temperature of the honeycomb fired body located in the center portion tends to easily increase in comparison with that of the honeycomb fired body located in the peripheral portion.
Moreover, in the honeycomb structured body having a plurality of honeycomb fired bodies combined with one another with an adhesive layer interposed therebetween (hereinafter, also referred to as an aggregated honeycomb structured body), since normally the thermal conductivity of the adhesive layer is inferior to the thermal conductivity of the honeycomb fired bodies, the thermal conduction is intervened by the adhesive layer. Consequently, a great temperature difference tends to be caused between the center portion and the peripheral portion in the aggregated honeycomb structured body.
In particular, in the honeycomb structured bodies disclosed in Patent Documents 1 to 3, the honeycomb fired bodies, each having a sufficiently smaller cross-sectional area than that of the honeycomb fired bodies in the center portion, are located in the peripheral portion, and since the presence of these honeycomb fired bodies having a smaller cross-sectional area located in the peripheral portion causes an increase in the ratio of occupation of the adhesive layer, the temperature difference between the center portion and the peripheral portion tends to be greater.
In the case when the temperature difference between the center portion and the peripheral portion of the honeycomb structured body increases, upon carrying out a regenerating process on the honeycomb structured body for burning and removing particulates, unburned particulates tend to remain in the peripheral portion of the honeycomb structured body.

Upon using the honeycomb structured body as an exhaust-gas purifying filter, it is required to hold the honeycomb structured body in a predetermined casing with a holding sealing material. In order to prevent displacement of the honeycomb structured body in the casing or to prevent coming off of a part of the honeycomb fired bodies from the honeycomb structured body due to the exhaust gases, it is required to surely secure the honeycomb structured body in the casing. Thus, the honeycomb structured body preferably has high strength for preventing damages due to compressive stress applied from the outside of the honeycomb structured body.

In the honeycomb structured body disclosed in Patent Documents 1 to 3, the adhesive layers are formed into a grid pattern. Thus, the honeycomb structured body has high strength to compressive stress applied from a predetermined direction (a direction parallel to the adhesive layer), but has low strength to compressive stress applied from another direction, for example a direction which makes 45° with the adhesive layer, and the honeycomb structured body tends to be damaged due to the compressive stress from the direction.

Moreover, in the honeycomb structured body disclosed in Patent Documents 1 to 3, each of the adhesive layers crosses one another at right angles. Thus, the honeycomb structured body tends to fail to spread stress generated in the honeycomb structured body and the honeycomb structured body tends to be damaged.

MEANS FOR SOLVING THE PROBLEMS

The inventors of the present invention have made eager investigations to solve the above problems, and thus completed invention.

A disclosure related to the invention is a honeycomb structured body comprising: a plurality of pillar-shaped honeycomb fired bodies that are combined with one another with an adhesive layer interposed therebetween, each of the honeycomb fired bodies having a large number of cells that are placed in parallel with one another in a longitudinal direction with a cell wall interposed therebetween,

wherein

the honeycomb fired bodies include a center-portion honeycomb fired body located in a center portion and a peripheral-portion honeycomb fired body located in a peripheral portion in a cross section perpendicular to the longitudinal direction of the honeycomb structured body,

a shape of the center-portion honeycomb fired body is a rectangular shape in the cross section,

an area of the center-portion honeycomb fired body is 900 to 2500 $mm^2$ in the cross section,

a shape of the peripheral-portion honeycomb fired body is different from the shape of the center-portion honeycomb fired body in the cross section, and

an area of the peripheral-portion honeycomb fired body is 0.9 to 1.3 times larger than the area of the center-portion honeycomb fired body in the cross section.

In the honeycomb structured body according to the disclosure, out of the plurality of the honeycomb fired bodies combined with one another with the adhesive layer interposed therebetween, the peripheral-portion honeycomb fired body has the area 0.9 to 1.3 times larger than the area of the center-portion honeycomb fired body in the cross section. Therefore, since no honeycomb fired body having an extremely small cross-sectional area is located in the peripheral portion of the honeycomb structured body and since the adhesive layer to be used for combining such small honeycomb fired bodies with one another is not required, the honeycomb structured body tends not to have a temperature distribution between the center portion and the peripheral portion, and unburned particulates tend not to remain upon carrying out the regenerating process.

In the case that the area of the peripheral-portion honeycomb fired body is less than 0.9 times larger than the area of the center-portion honeycomb fired body in the cross section, a temperature distribution tends to occur between the honeycomb fired body located in the center portion and that located in the peripheral portion, and unburned particulates tend to remain upon carrying out the regenerating process.

Moreover, in the case that the area of the peripheral-portion honeycomb fired body is more than 1.3 times larger than the area of the center-portion honeycomb fired body in the cross section, cracks may occur in the honeycomb fired body due to thermal stress.

Furthermore, in the honeycomb structured body according to the disclosure, the area of the center-portion honeycomb fired body is 900 to 2500 $mm^2$ in the cross section. The reason for this structure is described as follows.

In the case that the cross-sectional area of the center-portion honeycomb fired body is less than 900 $mm^2$, a large amount of adhesive tends to be required for forming the honeycomb structured body, with the result that a temperature distribution tends to occur in the honeycomb structured body and cracks tend to occur in the honeycomb fired body upon carrying out a regenerating process.

In contrast, in the case that the cross-sectional area of the center-portion honeycomb fired body is large, since the rate of occupation by the adhesive layer becomes comparatively smaller, the effect of the adhesive layer for alleviating the thermal stress becomes insufficient, although the temperature distribution tends not to occur upon carrying out a regenerating process. Therefore, cracks tend to occur in the honeycomb fired body. For this reason, the upper limit value of the cross-sectional area of the center-portion honeycomb fired body is preferably 2500 mm$^2$.

That is, the cross-sectional area of the center-portion honeycomb fired body maintained within the above range is suitable for preventing the occurrence of cracks in the honeycomb fired body upon carrying out the regenerating process.

In the honeycomb structured body according to the disclosure, the shape of the peripheral-portion honeycomb fired body is preferably formed into a shape surrounded by three line segments and one arc or elliptical arc in the cross section, and

two angles made by the two line segments out of the three line segments are a right angle and an obtuse angle.

In the case that the peripheral-portion honeycomb fired body has the shape of this kind, the size of the peripheral-portion honeycomb fired body in the cross section tends not to be extremely small in comparison with that of the center-portion honeycomb fired body. Therefore, the honeycomb structured body tends not to have a temperature distribution between the center portion and the peripheral portion, and unburned particulates tend not to remain upon carrying out the regenerating process.

A honeycomb structured body according to the invention comprises:

a ceramic block in which

a plurality of pillar-shaped honeycomb fired bodies are combined with one another with an adhesive layer interposed therebetween, and
each of the honeycomb fired bodies has a large number of cells that are placed in parallel with one another in a longitudinal direction with a cell wall interposed therebetween,

wherein

an area of the honeycomb fired body is 900 to 2500 mm$^2$ in a cross section perpendicular to the longitudinal direction, an area of the ceramic block is 10000 to 55000 mm$^2$ in the cross section, and
the number of the adhesive layers existing on a route which passes through the honeycomb fired bodies and extends from the center of gravity of the ceramic block to the periphery of the ceramic block in the cross section is:

two or less in the case that the area of the ceramic block in the cross section is 10000 mm$^2$ or more and less than 25000 mm$^2$,
three or less in the case that the area of the ceramic block in the cross section is 25000 mm$^2$ or more and less than 40000 mm$^2$, and
four or less in the case that the area of the ceramic block in the cross section is 40000 mm$^2$ or more and 55000 mm$^2$ or less.

With respect to the honeycomb structured body according to the invention, in the case that the center of gravity is on the adhesive layer upon counting the number of adhesive layers which exist on the route extending from the center of gravity of the ceramic block to the periphery of the ceramic block, the adhesive layer on which the center of gravity exists is counted as one of adhesive layers existing on the route.

Also with respect to the honeycomb structured body according to the invention, upon counting the number of adhesive layers which exist on the route extending from the center of gravity of the ceramic block to the periphery of the ceramic block, the route is decided so as to pass through the smallest number of the adhesive layers.

The honeycomb structured body according to the invention comprises the ceramic block in which the plurality of the honeycomb fired bodies are combined with one another with the adhesive layer interposed therebetween, and in the honeycomb structured body, the area of the honeycomb fired body is 900 to 2500 mm$^2$ in the cross section, and the area of the ceramic block is 10000 to 55000 mm$^2$ in the cross section.

In the honeycomb structured body of this kind, since the cross-sectional area of the ceramic block and the number of the adhesive layers which exist on the route extending from the center of gravity of the ceramic block to the periphery of the ceramic block in the cross section perpendicular to the longitudinal direction of the honeycomb structured body satisfy the above-mentioned relationships, the honeycomb structured body can exert the following effects:

the adhesive layer can alleviate thermal stress, and thus, it is possible to prevent occurrence of cracks and damages on the honeycomb structured body; and
the honeycomb structured body tends not to have a temperature distribution between the center portion and the peripheral portion of the honeycomb structured body, and thus, unburned particulates tend not to remain.

That is, in the honeycomb structured body according to the invention, since the route extending from the center portion to the peripheral portion of the honeycomb structured body (main route of heat transfer) is decided so as to pass through the adhesive layers as small in number as possible, and the honeycomb structured body does not impair a function to alleviate thermal stress of the adhesive layer, heat is easily transferred from the center portion to the peripheral portion of the honeycomb structured body, and thus, the honeycomb structured body tends not to have a temperature distribution between the center portion and the peripheral portion. Moreover, it is possible to prevent occurrence of damages and cracks in the honeycomb structured body.

In the honeycomb structured body according to the invention, the ceramic block preferably has a round shape in the cross section.

The following effect can be exerted particularly in the case that the ceramic block has a round shape in the cross section, that is, the honeycomb structured body tends not to have a temperature distribution between the center portion and the peripheral portion when the cross-sectional area of the ceramic block and the number of the adhesive layers which exist on the route extending from the center of gravity of the ceramic block to the periphery of the ceramic block in the cross section of the honeycomb structured body satisfy the above-mentioned relationships.

This is because, although the peripheral portion of the honeycomb block tends to include a honeycomb fired body having a small cross-sectional area in the case that the honeycomb block has a round cross-sectional shape, the honeycomb structured body satisfying the above relationships can avoid the tendency of this kind.

In the present description, the cross section perpendicular to the longitudinal direction of the honeycomb structured body, the cross section perpendicular to the longitudinal direction of the ceramic block, the cross section perpendicular to the longitudinal direction of the honeycomb fired body, and the cross section perpendicular to the longitudinal direction of the honeycomb molded body may be simply referred to as the cross section of a honeycomb structured body, the cross section of a ceramic block, the cross section of a honeycomb fired body, and the cross section of a honeycomb molded body.

Moreover, in the present description, the cross-sectional area of a honeycomb structured body, the cross-sectional area of a ceramic block, the cross-sectional area of a honeycomb fired body, and the cross-sectional area of a honeycomb molded body may be simply referred to as the cross-sectional area perpendicular to the longitudinal direction of the honeycomb structured body, the cross-sectional area perpendicular to the longitudinal direction of the ceramic block, the cross-sectional area perpendicular to the longitudinal direction of the honeycomb fired body, and the cross-sectional area perpendicular to the longitudinal direction of the honeycomb molded body.

In the present description, the center-portion honeycomb fired body refers to a honeycomb fired body that does not form the periphery of the honeycomb structured body in the cross section perpendicular to the longitudinal direction of the honeycomb structured body, and the peripheral-portion honeycomb fired body refers to a honeycomb fired body that forms the periphery of the honeycomb structured body in the cross section perpendicular to the longitudinal direction of the honeycomb structured body.

Here, in the case that a coat layer is formed on the honeycomb structured body as will be described later, the peripheral-portion honeycomb fired body refers to a honeycomb fired body that forms the periphery of a ceramic block.

As mentioned above, the honeycomb fired bodies used for forming the honeycomb structured body according to each of the disclosure are distinguished as the center-portion honeycomb fired bodies and the peripheral-portion honeycomb fired bodies.

However, in the present description, when the two kinds of honeycomb fired bodies are not particularly required to be distinguished, each of these is simply referred to as the honeycomb fired body.

BEST MODE FOR CARRYING OUT THE INVENTION

Referring to the drawings, the following description will discuss an embodiment of a honeycomb structured body according to the disclosure.

(First embodiment of the disclosure)

Fig. 1 is a perspective view schematically showing a honeycomb structured body according to the first embodiment of the disclosure.
Fig. 2 (a) is a perspective view schematically showing a center-portion honeycomb fired body in the honeycomb structured body according to the first embodiment of the disclosure and Fig. 2 (b) is an A-A line cross-sectional view of the honeycomb fired body shown in Fig. 2(a).
Fig. 3 is a perspective view schematically showing a peripheral-portion honeycomb fired body according to the first embodiment of the disclosure.

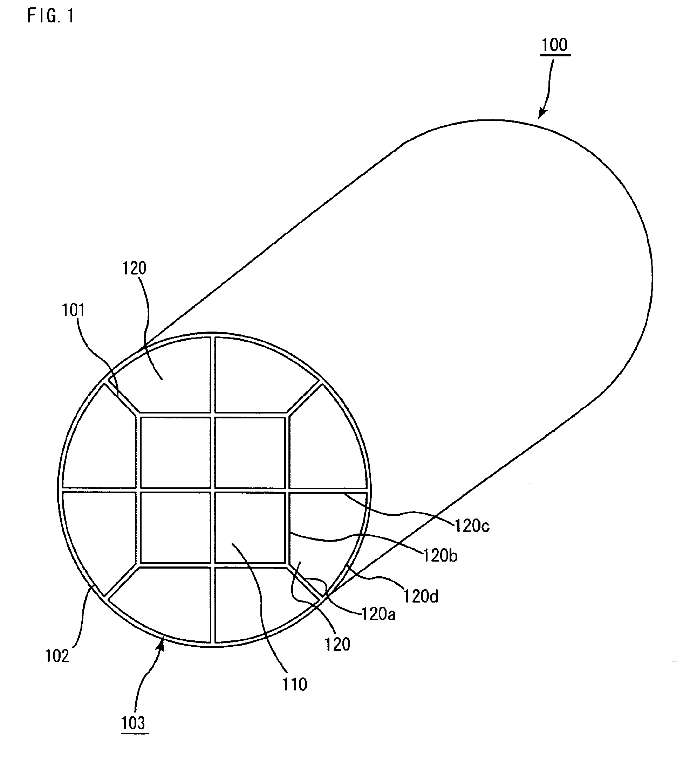

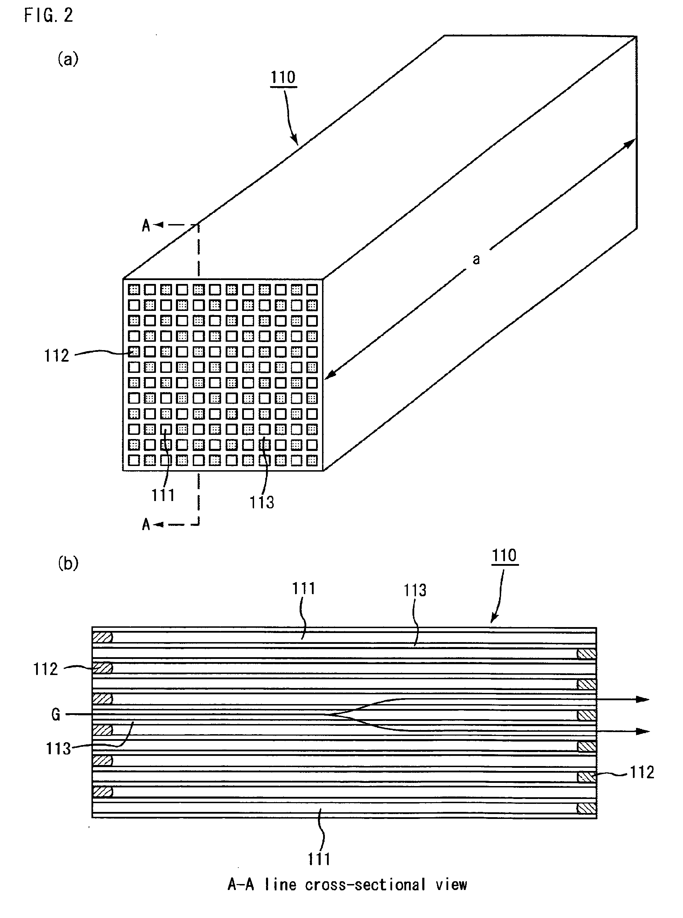

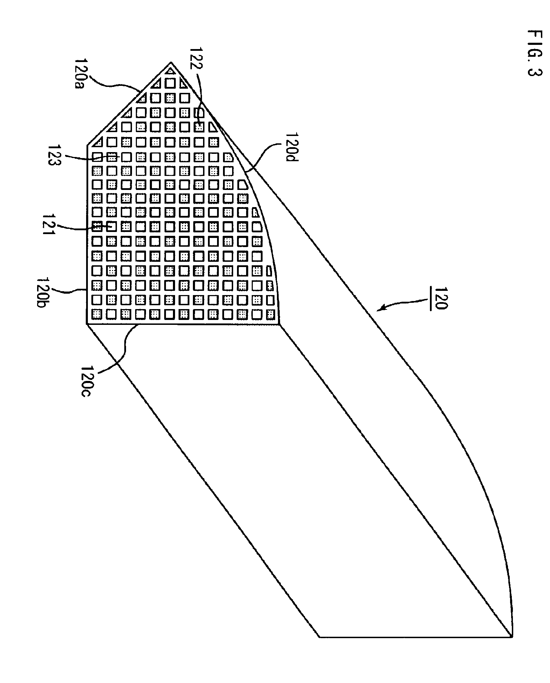

In a honeycomb structured body 100 shown in Fig. 1, a plurality of center-portion honeycomb fired bodies 110 having a shape shown in Figs. 2 (a) and 2(b) and a plurality of peripheral-portion honeycomb fired bodies 120 having a shape shown in Fig. 3 are combined with one another, with an adhesive layer 101 interposed therebetween, to form a ceramic block 103. A coat layer 102 is further formed on the periphery of the ceramic block 103.

The shape of the cross section of each of the center-portion honeycomb fired bodies 110 is a square shape.

The shape of the cross section of each of the peripheral-portion honeycomb fired bodies 120 is formed into a shape surrounded by three line segments 120a, 120b and 120c and an arc 120d. The two angles made by two line segments out of these three line segments (an angle made by the line segments 120b and 120c and an angle made by the line segments 120a and 120b) are 90° and 135°.

The honeycomb fired bodies 110 and 120 comprise porous silicon carbide sintered bodies.

The center-portion honeycomb fired body 110 shown in Figs. 2 (a) and 2 (b) has a structure in which a large number of cells 111 are longitudinally placed (the direction indicated by an arrow a in Fig. 2 (a)) in parallel with one another with a cell wall 113 therebetween, the cells 111 having either one of the ends sealed with a plug 112. Therefore, exhaust gas G having flown into one cell 111 with an opening on one end face (see an arrow in Fig. 2(b)) flow out from another cell 111 with an opening on the other end face after having always passed through the cell wall 113 that separates the cells 111.

Therefore, the cell wall 113 functions as a filter for capturing PM and the like.

In the same manner as in the center-portion honeycomb fired body 110, the peripheral-portion honeycomb fired body 120 shown in Fig. 3 has a structure in which a large number of cells 121 are longitudinally placed in parallel with one another with a cell wall 123 therebetween, and the cells 121 having either one of the ends sealed with a plug 122. Therefore, exhaust gas having flown into one cell 121 with an opening on one end face flows out from another cell 121 with an opening on the other end face after having always passed through a cell wall 123 that separates the cells 121. That is, although the outer shape of the peripheral-portion honeycomb fired body 120 is different from that of the center-portion honeycomb fired body 110, the peripheral-portion honeycomb fired body 120 has the same functions as those of the center-portion honeycomb fired body 110.

As shown in Fig. 1, in the honeycomb structured body 100, four pieces of the center-portion honeycomb fired bodies 110 are located in the center portion of the cross section of the honeycomb structured body 100, and eight pieces of the peripheral-portion honeycomb fired bodies 120 are located on the periphery of the four pieces of the center-portion honeycomb fired bodies 110. These honeycomb fired bodies are combined with one another with the adhesive layer 101 interposed therebetween so that the cross section of the honeycomb structured body 100 (ceramic block 103) is formed into a round shape.

In the honeycomb structured body 100, the shape of the cross section of the peripheral-portion honeycomb fired body 120 is different from that of the center-portion honeycomb fired body 110, and the cross-sectional area of the peripheral-portion honeycomb fired body 120 is 0.9 to 1.3 times larger than that of the center-portion honeycomb fired body 110.

Therefore, no honeycomb fired bodies having an extremely small cross-sectional area are located in the peripheral portion of the honeycomb structured body 100, and of course, an adhesive layer to be used for combining such small honeycomb fired bodies with one another is not required. For this reason, the honeycomb structured body 100 tends not to have a temperature distribution between the center portion and the peripheral portion, and unburned particulates tend not to remain upon carrying out the regenerating process.

As mentioned above, the cross section of the peripheral-portion honeycomb fired body 120 is formed into the shape surrounded by the three line segments 120a, 120b and 120c and an arc 120d. The two angles made by two line segments out of these three line segments (an angle made by the line segments 120b and 120c and an angle made by the line segments 120a and 120b) are 90° and 135°. The fact that the shape of the peripheral-portion honeycomb fired body 120 is formed into this shape is also one reason why no honeycomb fired body having an extremely small cross-sectional area is located in the peripheral portion of the honeycomb structured body 100.

Moreover, in the honeycomb structured body 100, the cross-sectional area of the center-portion honeycomb fired body 110 is 900 to 2500 mm$^2$.

By setting the cross-sectional area of the center-portion honeycomb fired body 110 to such a size, it becomes possible to prevent cracks from occurring in the honeycomb structured body 100 upon carrying out a regenerating process on the honeycomb structured body 100.

The following description will discuss a method for manufacturing a honeycomb structured body of the present embodiment.

(1) A molding process is carried out in which a wet mixture containing ceramic powders and a binder is extrusion-molded to manufacture a honeycomb molded body.

More specifically, first, as ceramic powders, silicon carbide powders each having a different average particle diameter, an organic binder, a liquid-state plasticizer, a lubricant and water are mixed to prepare a wet mixture used for manufacturing a honeycomb molded body.

Successively, this wet mixture is charged into an extrusion molding apparatus. When the wet mixture is charged into the extrusion molding apparatus, the wet mixture is extrusion-molded into a honeycomb molded body having a predetermined shape.

In order to manufacture a honeycomb molded body having a variety of cross-sectional shapes, extrusion-molding dies corresponding to the respective shapes are used. The variety of cross-sectional shapes include a square cross-sectional shape and a shape surrounded by three line segments and an arc, with the two angles (made by two line segments out of these three line segments) being 90° and 135°.

(2) Next, the honeycomb molded body thus formed is cut into a predetermined length, and undergoes a drying process by using a drying apparatus, such as a microwave drying apparatus, a hot-air drying apparatus, a dielectric drying apparatus, a reduced-pressure drying apparatus, a vacuum drying apparatus and a freeze drying apparatus. Then, this dried honeycomb molded body undergoes a sealing process in which predetermined cells are filled with a plug material paste to be formed into plugs to seal the cells.

Here, with respect to the conditions of the cutting process, drying process and sealing process, those conditions conventionally used upon manufacturing a honeycomb fired body can be adopted.

(3) Next, the honeycomb molded body undergoes a degreasing process in which the organic substances therein are heated in a degreasing furnace, and is then transported to a firing furnace, and undergoes a firing process therein to manufacture a honeycomb fired body.

Here, with respect to the conditions of the degreasing process and firing process, those conditions conventionally used upon manufacturing a honeycomb fired body can be adopted.

By carrying out the above-mentioned processes, the center-portion honeycomb fired body and the peripheral-portion honeycomb fired body are manufactured.

(4) Next, an adhesive paste was applied to a predetermined side surface of each of the center-portion honeycomb fired body and each of the peripheral-portion honeycomb fired body, with the predetermined end portion of each of the cells sealed, to form an adhesive paste layer. After this, another honeycomb fired body is piled up onto the above-mentioned adhesive paste layer sequentially. By carrying out the above process repeatedly, the combining process is carried out to manufacture a ceramic block in which a predetermined number of the honeycomb fired bodies are combined with one another.

With respect to the adhesive paste, the adhesive paste comprising an inorganic binder, an organic binder, and inorganic particles may be used, for example. Moreover, the adhesive paste may further comprise at least one of inorganic fibers and whiskers.

(5) Subsequently, a coat layer forming process is further carried out in which a coating material paste is applied to the periphery of the ceramic block formed into the round pillar shape, and is dried and solidified to form a coat layer.

Here, the same paste as the adhesive paste may be used as the coating material paste. Alternatively, a paste having a different composition from the composition of the adhesive paste may be used as the coating material paste.

It is not necessarily required to form the coat layer, and the coat layer may be formed, on demand.

It is possible to manufacture the honeycomb structured body of the present embodiment through the above-mentioned processes.

The following description will summarize the effects of the honeycomb structured body of the present embodiment.

(1) In the honeycomb structured body of the present embodiment, the cross-sectional shape of the peripheral-portion honeycomb fired body 120 is different from the cross-sectional shape of the center-portion honeycomb fired body 110, and the cross-sectional area of the peripheral-portion honeycomb fired body 120 is 0.9 to 1.3 times larger than the cross-sectional area of the center-portion honeycomb fired body. Therefore, since no honeycomb fired body having an extremely small cross-sectional area is located in the peripheral portion of the honeycomb structured body and since the adhesive layer to be used for combining such small honeycomb fired bodies with one another is not required, the honeycomb structured body tends not to have a temperature distribution between the center portion and the peripheral portion, and unburned particulates tend not to remain upon carrying out the regenerating process.

(2) In the honeycomb structured body of the present embodiment, the cross-sectional shape of the peripheral-portion honeycomb fired body is formed into a shape that is surrounded by three line segments and an arc. The two angles made by two line segments out of these three line segments are 90° and 135°. For this reason, it is possible to avoid the cross-sectional area of the peripheral-portion honeycomb fired body from becoming extremely small in comparison with the cross-sectional area of the center-portion honeycomb fired body. Moreover, the adhesive layer used for combining the honeycomb fired bodies having a small cross-sectional area with one another is not required. Therefore, the honeycomb structured body tends not to have a temperature distribution between the center portion and the peripheral portion, and unburned particulates tend not to remain upon carrying out the regenerating process.

(3) In the honeycomb structured body of the present embodiment, the cross-sectional area of the center-portion honeycomb fired body is 900 to 2500 mm$^2$. For this reason, it becomes possible to prevent cracks from occurring in the honeycomb fired body upon carrying out a regenerating process.

(4) In the honeycomb fired body of the honeycomb structured body of the present embodiment, either one end of each of the cells is sealed with a plug. Therefore, the honeycomb structured body of the present embodiment can be suitably used as a diesel particulate filter.

(5) In the honeycomb structured body of the present embodiment, since the coat layer is formed on the peripheral side face of the ceramic block, it is possible to prevent leakage of particulates from the peripheral side face of the honeycomb structured body.

(Example 1-1)

The following description will discuss examples that specifically disclose the first embodiment of the disclosure.
(1) An amount of 52.8% by weight of a silicon carbide coarse powder having an average particle diameter of 22 $\mu$m and 22.6% by weight of a silicon carbide fine powder having an average particle diameter of 0.5 $\mu$m were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then kneaded to prepare a wet mixture. The obtained wet mixture was extrusion-molded.

In this process, there have been manufactured: a raw honeycomb molded body having approximately the same shape as that of the center-portion honeycomb fired body 110 illustrated in Figs. 2 (a) and 2 (b) with cells not sealed; and a raw honeycomb molded body having approximately the same shape as that of the peripheral-portion honeycomb fired body 120 illustrated in Fig. 3 with cells not sealed.
(2) Next, the raw honeycomb molded bodies were dried by using a microwave drying apparatus to obtain dried honeycomb molded bodies. A paste having the same composition as that of the wet mixture was then filled into predetermined cells, and the dried honeycomb molded bodies were again dried by using a drying apparatus.

(3) The dried honeycomb molded bodies were degreased at 400°C, and then fired at 2200°C under normal pressure argon atmosphere for three hours.

Thus, a center-portion honeycomb fired body 110 comprising a silicon carbide sintered body and having a porosity of 45%, an average pore diameter of 15 $\mu$m, a size of 34.3 mm x 34.3 mm x 150 mm, the number of cells (cell density) of 300 pcs/inch$^2$ and a thickness of cell walls of 0.25 mm (10 mil) was manufactured.

Also, a peripheral-portion honeycomb fired body 120 having the same porosity, the same average pore diameter, the same number of cells (cell density) and the same thickness of cell walls as those of the center-portion honeycomb fired body 110 and also having a cross-sectional shape surrounded by three line segments and an arc, with the two angles, made by two line segments out of these three line segments, being 90° and 135° (line segment 120a = 20.8 mm, line segment 120b = 35.0 mm, and line segment 120c = 35.7 mm) was manufactured.

Here, the cross-sectional area of the center-portion honeycomb fired body 110 was 1190 mm$^2$ and the cross-sectional area of the peripheral-portion honeycomb fired body 120 was 1292 mm$^2$. Therefore, the cross-sectional area of the peripheral-portion honeycomb fired body 120 was 1.09 times larger than the cross-sectional area of the center-portion honeycomb fired body 110.

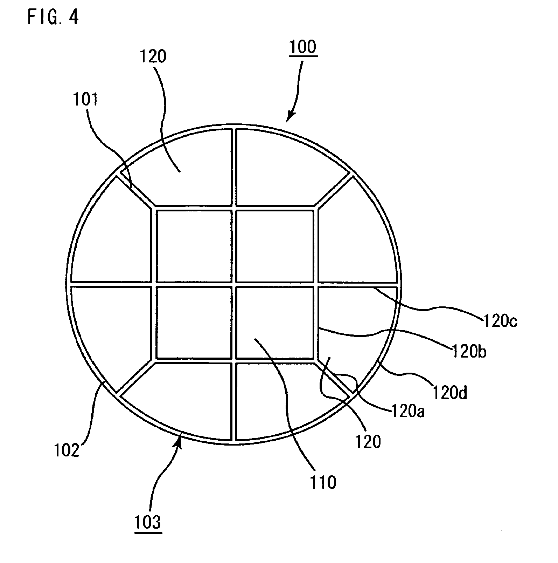

(4) An adhesive paste was applied to predetermined side faces of the center-portion honeycomb fired body 110 and the peripheral-portion honeycomb fired body 120, and four pieces of the center-portion honeycomb fired bodies 110 and eight pieces of the peripheral-portion honeycomb fired bodies 120 were bonded to one another with the adhesive paste interposed therebetween so as to be arranged as shown in Fig. 4. The adhesive paste was solidified at 180°C in 20 minutes to manufacture a round pillar-shaped ceramic block 103 having the adhesive layer 1 mm in thickness.

Here, as the adhesive paste, an adhesive paste containing 30.0% by weight of silicon carbide particles having an average particle diameter of 0.6 $\mu$m, 21.4% by weight of silica sol, 8.0% by weight of carboxy methylcellulose and 40.6% by weight of water, was used.

(5) By using a coating material paste having the same composition as that of the adhesive paste used in the process (4) , a coating material paste layer was formed on the periphery of the ceramic block 103. Thereafter, the coating material paste layer was dried at 120°C to manufacture a round pillar-shaped honeycomb structured body having a size of 143.8 mm in diameter x 150 mm in length with a coat layer 102 formed on the periphery thereof.

The honeycomb structured body 100 manufactured in Example 1 has a cross-sectional shape as shown in Fig. 4.

(Example 1-2)

A honeycomb structured body was manufactured in the same manner as in Example 1-1, except that the sizes of a center-portion honeycomb fired body 110 and a peripheral-portion honeycomb fired body 120, each manufactured through the processes (1) to (3) of Example 1-1, were changed to the below-mentioned sizes.

A center-portion honeycomb fired body 110 comprising a silicon carbide sintered body and having a porosity of 45%, an average pore diameter of 15 $\mu$m, a size of 36.7 mm x 36.7 mm x 150 mm, the number of cells (cell density) of 300 pcs/inch$^2$ and a thickness of cell walls of 0.25 mm (10 mil) was manufactured.

Also, a peripheral-portion honeycomb fired body 120 having the same porosity, the same average pore diameter, the same number of cells (cell density) and the same thickness of cell walls as those of the center-portion honeycomb fired body 110 and also having a cross-sectional shape surrounded by three line segments and an arc, with the two angles, made by two line segments out of these three line segments, being 90° and 135° (line segment 120a = 17.7 mm, line segment 120b = 37.2 mm and line segment 120c = 33.5 mm) was manufactured.

Here, the cross-sectional area of the center-portion honeycomb fired body 110 was 1347 mm$^2$, and the cross-sectional area of the peripheral-portion honeycomb fired body 120 was 1215 mm$^2$. Therefore, the cross-sectional area of the peripheral-portion honeycomb fired body 120 was 0.90 times larger than the cross-sectional area of the center-portion honeycomb fired body 110.

(Example 1-3)

A honeycomb structured body was manufactured in the same manner as in Example 1-1, except that the sizes of a center-portion honeycomb fired body 110 and a peripheral-portion honeycomb fired body 120, each manufactured through the processes (1) to (3) of Example 1-1, were changed to the below-mentioned sizes.

A center-portion honeycomb fired body 110 comprising a silicon carbide sintered body and having a porosity of 45%, an average pore diameter of 15 $\mu$m, a size of 32.4 mm x 32.4 mm x 150 mm, the number of cells (cell density) of 300 pcs/inch$^2$ and a thickness of cell walls of 0.25 mm (10 mil) was manufactured.

Also, a peripheral-portion honeycomb fired body 120 having the same porosity, the same average pore diameter, the same number of cells (cell density) and the same thickness of cell walls as those of the center-portion honeycomb fired body 110 and also having a cross-sectional shape surrounded by three line segments and an arc, with the two angles, made by two line segments out of these three line segments, being 90° and 135° (line segment 120a = 23.8 mm, line segment 120b = 32.9 mm and line segment 120c = 37.8 mm) was manufactured.

Here, the cross-sectional area of the center-portion honeycomb fired body 110 was 1050 mm$^2$, and the cross-sectional area of the peripheral-portion honeycomb fired body 120 was 1363 mm$^2$. Therefore, the cross-sectional area of the peripheral-portion honeycomb fired body 120 was 1.30 times larger than the cross-sectional area of the center-portion honeycomb fired body 110.

(Comparative Example 1-1)

(1) By carrying out the same processes as the processes (1) to (3) of Example 1-1, a honeycomb fired body comprising a silicon carbide sintered body and having a porosity of 45%, an average pore diameter of 15 $\mu$m, a size of 34.5 mm x 34.5 mm x 150 mm, the number of cells (cell density) of 300 pcs/inch$^2$ and a thickness of cell walls of 0.25 mm (10 mil) was manufactured.

(2) An adhesive paste was applied to a predetermined side face of the honeycomb fired body, and 16 pieces of honeycomb fired bodies were bonded to one another with the adhesive paste interposed therebetween. The adhesive paste was solidified at 180°C in 20 minutes to manufacture an aggregated body of the honeycomb fired bodies having a rectangular pillar-shape, with the thickness of the adhesive layer being 1 mm.

Here, as the adhesive paste, the same adhesive paste as that used in Example 1-1 was used.
(3) Next, the periphery of the aggregated body of the honeycomb fired bodies was cut by using a diamond cutter, to manufacture a round pillar-shaped ceramic block.

Subsequently, a coating material paste layer was formed on the periphery of the ceramic block by using the coating material paste made of the same material as that of the adhesive paste. Further, this coating material paste layer was dried at a temperature of 120°C to manufacture a round pillar-shaped honeycomb structured body having a size of 143.8 mm in diameter x 150 mm in length, with a coat layer formed on the periphery thereof.

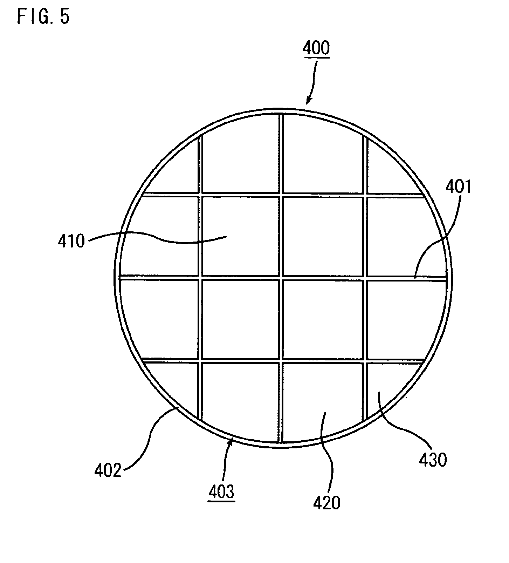

The cross-sectional shape of the honeycomb structured body manufactured in Comparative Example 1-1 is shown in Fig. 5.

Fig. 5 is a cross-sectional view that shows the honeycomb structured body 400 manufactured in Comparative Example 1-1, and in Fig. 5, a reference numeral 410 represents a center-portion honeycomb fired body, reference numerals 420 and 430 represent peripheral-portion honeycomb fired bodies, a reference numeral 401 represents an adhesive layer, a reference numeral 402 represents a coat layer and a reference numeral 403 represents a ceramic block.

In the honeycomb structured body 400, the cross-sectional area of the center-portion honeycomb fired body 410 is 1190.5 mm$^2$, the cross-sectional area of the peripheral-portion honeycomb fired body 420 is 1095 mm$^2$, and the cross-sectional area of the peripheral-portion honeycomb fired body 430 is 357 mm$^2$.

Therefore, the cross-sectional area of the peripheral-portion honeycomb fired body 420 is 0.92 times larger than the cross-sectional area of the center-portion honeycomb fired body 410, and the cross-sectional area of the peripheral-portion honeycomb fired body 430 is 0.30 times larger than the cross-sectional area of the center-portion honeycomb fired body 410.

(Comparative Example 1-2)

A honeycomb structured body was manufactured in the same manner as in Example 1-1, except that the sizes of a center-portion honeycomb fired body 110 and a peripheral-portion honeycomb fired body 120, each manufactured through the processes (1) to (3) of Example 1-1, were changed to the below-mentioned sizes.

A center-portion honeycomb fired body 110 comprising a silicon carbide sintered body and having a porosity of 45%, an average pore diameter of 15 $\mu$m, a size of 31.5 mm $\times$ 31.5 mm $\times$ 150 mm, the number of cells (cell density) of 300 pcs/inch$^2$ and a thickness of cell walls of 0.25 mm (10 mil) was manufactured.

Also, a peripheral-portion honeycomb fired body 120 having the same porosity, the same average pore diameter, the same number of cells (cell density) and the same thickness of cell walls as those of the center-portion honeycomb fired body 110 and also having a cross-sectional shape surrounded by three line segments and an arc, with the two angles, made by two line segments out of these three line segments, being 90° and 135° (line segment 120a = 25.0 mm, line segment 120b = 32.0 mm and line segment 120c = 38.2 mm) was manufactured.

Here, the cross-sectional area of the center-portion honeycomb fired body 110 was 992 mm$^2$, and the cross-sectional area of the peripheral-portion honeycomb fired body 120 was 1392 mm$^2$. Therefore, the cross-sectional area of the peripheral-portion honeycomb fired body 120 was 1.40 times larger than the cross-sectional area of the center-portion honeycomb fired body 110.

(Evaluation of honeycomb structured body)

A regenerating process was carried out on each of the honeycomb structured bodies manufactured in Examples 1-1 to 1-3 and Comparative Examples 1-1 and 1-2 by the following method, and a regenerating rate (%) was measured by the following method based on weight differences before and after the regenerating process.

Here, the smaller the regenerating rate is, the more the particulates remain.

(Regenerating process)

Each of the honeycomb structured bodies according to Examples 1-1 to 1-3 and Comparative Examples 1-1 and 1-2 was placed in an exhaust passage of a 2L engine, and a commercially available catalyst supporting carrier comprising a honeycomb structured body made of cordierite (diameter: 200 mm, length: 100 mm, cell density: 400 pcs/inch$^2$, amount of supported platinum: 5 g/L) was placed in the exhaust passage of the engine at a position closer to a gas-inlet side than the previously-placed honeycomb structured body as an exhaust gas purifying apparatus. Particulates were captured for 7 hours, while the engine was driven at the number of revolutions of 3000 min$^{-1}$ with a torque of 50 Nm. The amount of the captured particulates was 8 g/L.

Thereafter, the engine was driven at the number of revolutions of 1250 min$^{-1}$ with a torque of 60 Nm, and when the temperature of the filter became constant, the state was kept for one minute. Thereafter, a post injection was performed, and then the temperature of exhaust gas was raised by utilizing the oxidation catalyst present at the front side of the exhaust gas purifying apparatus to burn particulates.

The conditions for the post injection were set so that the temperature of the exhaust gases flowing in the honeycomb structured body became almost constant at 600°C after a lapse of one minute from the start.

(Calculation of Regenerating Rate)

Provided that the initial weight of a honeycomb structured body prior to capturing particulates is $W_0$, that the weight of the honeycomb structured body prior to a regenerating process after capturing particulates is $W_1$, and that the weight of the honeycomb structured body after the regenerating process is $W_2$, the regenerating rate was calculated by using the following equation (1):

$$\mathrm{Regenerating~rate} = [(W_1 - W_0) - (W_2 - W_0)]/(W_1 - W_0) \cdots (1).$$

As a result, the regenerating rate of the honeycomb structured body of Example 1-1 was 85%.

The regenerating rate of the honeycomb structured body of Example 1-2 was 80%.

The regenerating rate of the honeycomb structured body of Example 1-3 was 88%.

In contrast, the regenerating rate of the honeycomb structured body of Comparative Example 1-1 was 70%.

Moreover, although the regenerating rate of the honeycomb structured body of Comparative Example 1-2 was 90%, cracks occurred in a part of the peripheral-portion honeycomb fired body after the regenerating process.

Here, in the honeycomb structured bodies of Examples 1-1 to 1-3 and Comparative Example 1-1, no cracks occurred in the honeycomb fired bodies after the regenerating process.

The reason that the regenerating rate was low in the honeycomb structured body in Comparative Example 1-1 is presumably because a large amount of unburned particulates remained upon carrying out the regenerating process. Moreover, the reason that cracks were observed in the honeycomb structured body of Comparative Example 1-2 is presumably because the cross-sectional area of the peripheral-portion honeycomb fired body was too large relative to the cross-sectional area of the center-portion honeycomb fired body.

(Second Embodiment of the disclosure)

Referring to the drawings, the following description will discuss a second embodiment that is another embodiment of the honeycomb structured body of the dsiclosure.

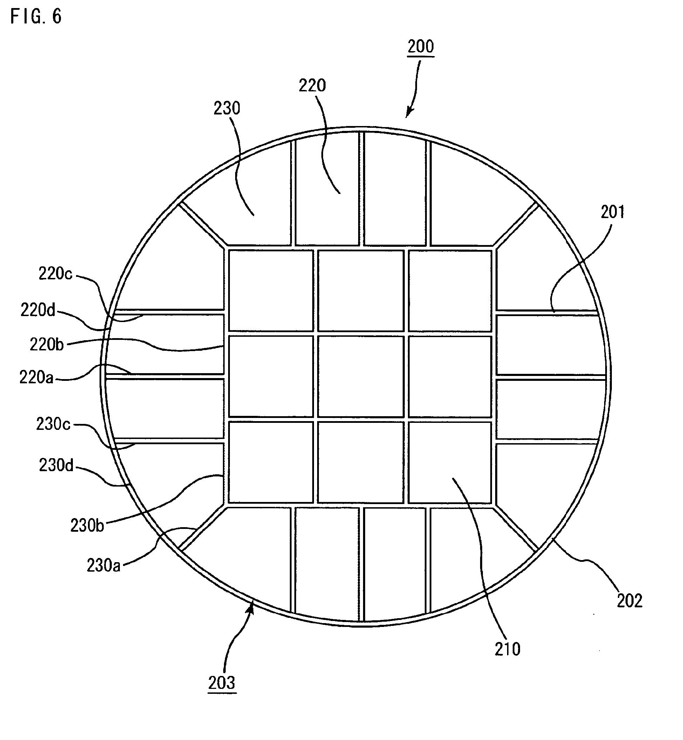

Fig. 6 is a cross-sectional view of a honeycomb structured body according to the second embodiment of the disclosure.
As shown in Fig. 6, the honeycomb structured body 200 of the present embodiment has a structure in which a plurality of center-portion honeycomb fired bodies 210 and pluralities of peripheral-portion honeycomb fired bodies 220 and 230 are combined with one another with an adhesive layer 201 interposed therebetween to form a ceramic block 203. A coat layer 202 is formed on the periphery of the ceramic block 203.
The cross section of each of the center-portion honeycomb fired bodies 210 has a square shape.
The cross section of each of the peripheral-portion honeycomb fired bodies 220 is formed into a shape surrounded by three line segments 220a, 220b and 220c and an arc 220d. The two angles made by two line segments out of these three line segments (an angle made by the line segments 220a and 220b and an angle made by the line segments 220b and 220c) are 90°.
The cross section of each of the peripheral-portion honeycomb fired bodies 230 is formed into a shape surrounded by three line segments 230a, 230b and 230c and an arc 230d. The two angles made by two line segments out of these three line segments (an angle made by the line segments 230b and 230c and an angle made by the line segments 230a and 230b) are 90° and 135°.
The center-portion honeycomb fired body 210 is the same as the center-portion honeycomb fired body 110 used for the honeycomb structured body of the first embodiment. The peripheral-portion honeycomb fired bodies 220 and 230 have the same functions as that of the center-portion honeycomb fired body 110 used for the honeycomb structured body of the first embodiment although outer shapes of those peripheral-portion honeycomb fired bodies are different from that of the center-portion honeycomb fired body 110.
Moreover, the honeycomb fired bodies 210, 220 and 230 comprise porous silicon carbide sintered bodies.
As shown in Fig. 6, in the honeycomb structured body 200, nine pieces of the center-portion honeycomb fired bodies 210 are located in the center portion of the cross section of the honeycomb structured body 200, and eight pieces of the peripheral-portion honeycomb fired bodies 220 and eight pieces of the peripheral-portion honeycomb fired bodies 230 are located on the periphery of the nine pieces of center-portion honeycomb fired bodies 210. These honeycomb fired bodies are combined with one another with the adhesive layer 201 interposed therebetween so that the cross section of the honeycomb structured body 200 (ceramic block 203) is formed into a round shape.
In the honeycomb structured body 200, the cross-sectional shape of each of the peripheral-portion honeycomb fired bodies 220 and 230 is different from that of the center-portion honeycomb fired body 210. The cross-sectional area of each of the peripheral-portion honeycomb fired bodies 220 and 230 is 0.9 to 1.3 times larger than that of the center-portion honeycomb fired body 210.
Therefore, no honeycomb fired body having an extremely small cross-sectional area is located in the peripheral portion of the honeycomb structured body 200, and of course, an adhesive layer to be used for combining such small honeycomb fired bodies with one another is not required. For this reason, the honeycomb structured body 200 tends not to have a temperature distribution between the center portion and the peripheral portion, and unburned particulates tend not to remain upon carrying out the regenerating process.
As mentioned above, the cross section of the peripheral portion honeycomb fired body 220 is formed into the shape surrounded by the three line segments 220a, 220b and 220c and an arc 220d. The two angles made by two line segments out of these three line segments (an angle made by the line segments 220a and 220b and an angle made by the line segments 220b and 220c) are 90°. As mentioned above, the cross section of the peripheral portion honeycomb fired body 230 is formed into the shape surrounded by three line segments 230a, 230b and 230c and an arc 230d. The two angles made by two line segments out of these three line segments (an angle made by the line segments 230b and 230c and an angle made by the line segments 230a and 230b) are 90° and 135°. The fact that the shape of each of the peripheral-portion honeycomb fired bodies 220 and 230 is formed into each of these shapes is also one reason why no honeycomb fired body having an extremely small cross-sectional area is located in the peripheral portion of the honeycomb structured body 200.
Here, also in the honeycomb structured body 200, the cross-sectional area of center-portion honeycomb fired body 210 is 900 to 2500 mm$^2$.
The reason for this is the same as mentioned in the first embodiment of the disclosure.
The following description will discuss a method for manufacturing the honeycomb structured body of the present embodiment.

The method for manufacturing the honeycomb structured body of the present embodiment is the same as the method for manufacturing the honeycomb structured body of the first embodiment of the discosure, except for the following points. That is, the honeycomb structured body of the present embodiment can be manufactured by using the same method as the method for manufacturing the honeycomb structured body of the first embodiment of the disclosure, except that the shapes of honeycomb molded bodies formed in the molding process (1) of the manufacturing method of the first embodiment of the disclosure have almost the same shapes as those of the center-portion honeycomb fired body 210 and the peripheral-portion honeycomb fired bodies 220 and 230 as shown in Fig. 6 while either one end of each of the cells is not sealed, and except that, upon carrying out the combining process (4) of the manufacturing method of the first embodiment of the disclosure, the respective honeycomb fired bodies are combined with one another so that the center-portion honeycomb fired body 210 and the peripheral-portion honeycomb fired bodies 220 and 230 are located as shown in Fig. 6.

The honeycomb structured body of the present embodiment can exert the same effects as those of the honeycomb structured body of the first embodiment of the disclosure.

(Example 1-4)

The following description will discuss an example that more specifically discloses the second embodiment of the disclosure. However, the disclosure is not intended to be limited only by this example.

(1) By carrying out the same method as the molding process (1) of Example 1-1, raw honeycomb molded bodies having almost the same shapes as those of the center-portion honeycomb fired body 210 and peripheral-portion honeycomb fired bodies 220 and 230 shown in Fig. 6, with no cells being sealed, were manufactured.

(2) Next, the raw honeycomb molded bodies were dried by using a microwave drying apparatus to obtain dried honeycomb molded bodies. A paste having the same composition as that of the wet mixture was then filled into predetermined cells, and the dried honeycomb molded bodies were again dried by using a drying apparatus.

(3) The dried honeycomb molded bodies were degreased at 400°C, and then fired at 2200°C under normal pressure argon atmosphere for three hours.

Thus, a center-portion honeycomb fired body 210 comprising a silicon carbide sintered body and having a porosity of 45%, an average pore diameter of 15 $\mu$m, a size of 34.5 mm x 34.5 mm x 200 mm, the number of cells (cell density) of 300 pcs/inch$^2$ and a thickness of cell walls of 0.25 mm (10 mil) was manufactured.

Also, a peripheral-portion honeycomb fired body 220 having the same porosity, the same average pore diameter, the same number of cells (cell density) and the same thickness of cell walls as those of the center-portion honeycomb fired body 210 and also having a cross-sectional shape surrounded by three line segments and an arc, with the two angles, made by two line segments out of these three line segments, being 90° (line segment 220a = 45.6 mm, line segment 220b = 26.8 mm and line segment 220c = 41.8 mm) was manufactured.

A peripheral-portion honeycomb fired body 230, which had the same porosity, the same average pore diameter, the same number of cells (cell density) and the same thickness of cell walls as those of the center-portion honeycomb fired body 210, and also had a cross-sectional shape surrounded by three line segments and an arc, with the two angles, made by two line segments out of these three line segments, being 90° and 135° (line segment 230a = 24.9 mm, line segment 230b = 24.5 mm and line segment 230c = 41.8 mm) was manufactured. Here, the cross-sectional area of the center-portion honeycomb fired body 210 was 1190 mm$^2$, the cross-sectional area of the peripheral-portion honeycomb fired body 220 was 1226 mm$^2$ and the cross-sectional area of the peripheral-portion honeycomb fired body 230 was 1226 mm$^2$. Therefore, the cross-sectional area of the peripheral-portion honeycomb fired body 220 was 1.03 times larger than the cross-sectional area of the center-portion honeycomb fired body 210 and the cross-sectional area of the peripheral-portion honeycomb fired body 230 was 1.03 times larger than the cross-sectional area of the center-portion honeycomb fired body 210.

(4) An adhesive paste was applied to a predetermined side face of each of the center-portion honeycomb fired body 210 and the peripheral-portion honeycomb fired bodies 220 and 230, and nine pieces of the center-portion honeycomb fired bodies 210, eight pieces of the peripheral-portion honeycomb fired bodies 220, and eight pieces of the peripheral-portion honeycomb fired bodies 230 were bonded to one another with the adhesive paste interposed therebetween so as to be arranged as shown in Fig. 6. The adhesive paste was solidified at 180°C in 20 minutes to manufacture a round pillar-shaped ceramic block 203 having the adhesive layer 1 mm in thickness.

Here, as the adhesive paste, the same adhesive paste as that used in Example 1-1 was used.
(5) By using a coating material paste having the same composition as the adhesive paste used in the process (4), a coating material paste layer was formed on the periphery of the ceramic block 203. Thereafter, the coating material paste layer was dried at 120°C to manufacture a round pillar-shaped honeycomb structured body 200 having a size of 203.2 mm in diameter x 200 mm in length with a coat layer 202 formed on the periphery thereof.

The honeycomb structured body manufactured in Example 1-4 has a cross-sectional shape as shown in Fig. 6.
A regenerating process was carried out on the honeycomb structured body manufactured in Example 1-4 and a regenerating rate was measured based on weight differences, by the same method as in Example 1-1 except that a 4L engine was used instead of a 2L engine.
Consequently, the regenerating rate of the honeycomb structured body of Example 1-4 was 82%.

(Third embodiment of the disclosure)

In the methods for manufacturing the honeycomb structured body according to the first and second embodiments of the disclosure, the honeycomb structured body is manufactured by forming the honeycomb fired body molded in the predetermined shape. However, the honeycomb structured body according to an embodiment of the disclosure may be manufactured according to the method mentioned below.
Hereinafter, another method for manufacturing a honeycomb structured body according to an embodiment of the disclosure will be described by exemplifying the case of manufacturing the honeycomb structured body according to the first embodiment.

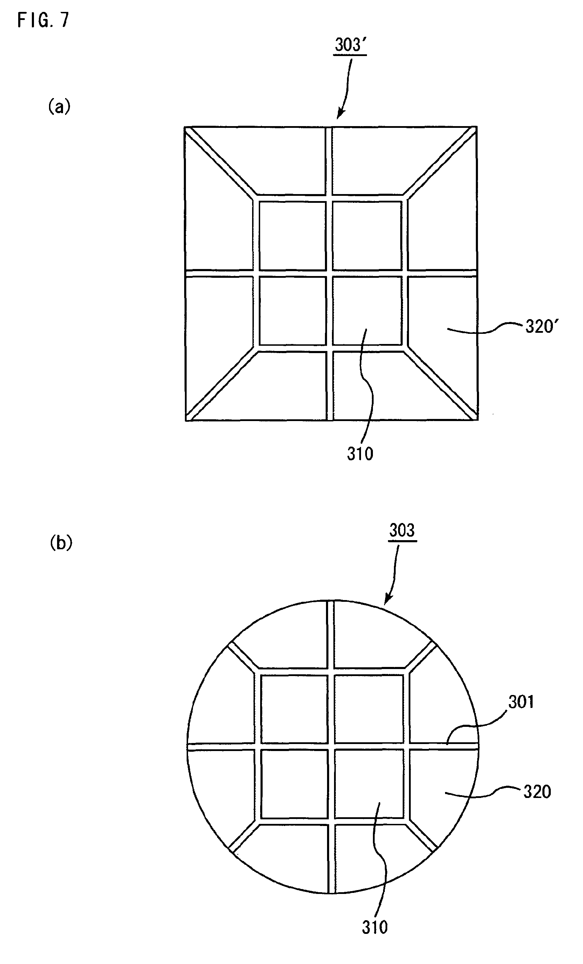

Figs. 7(a) and 7(b) are cross-sectional views for describing one example of a method for manufacturing a honeycomb structured body according to the third embodiment of the disclosure.

(1) Honeycomb fired bodies with either one end of each of the cells sealed are manufactured by the same method as in the processes (1) to (3) of the first embodiment of the disclosure.

At this time, a center-portion honeycomb fired body 310 having a rectangular cross-sectional shape and a peripheral-portion honeycomb fired body 320' having a trapezoid cross-sectional shape are manufactured (see Fig. 7(a)).
(2) Next, in the same manner as in the process (4) of the first embodiment, the center-portion honeycomb fired bodies 310 and the peripheral-portion honeycomb fired bodies 320' are combined with one another with the adhesive paste layer interposed therebetween so as to be arranged as shown in Fig. 7(a). Moreover, the adhesive paste layer is solidified to manufacture an aggregated body of the honeycomb fired bodies 303'.

(3) Next, a periphery cutting process is carried out in which the side face of the aggregated body of the honeycomb fired bodies 303' is cut by using a diamond cutter or the like to form a round pillar shape so as to manufacture a ceramic block 303 in which the center-portion honeycomb fired bodies 310 and the peripheral-portion honeycomb fired bodies 320 are combined with one another with the adhesive layer 301 interposed therebetween (see Fig. 7(b)).

Then, if needed, a coat layer (not illustrated) is formed on the peripheral side face of the ceramic block 303 to complete a honeycomb structured body.

(Other embodiments of the disclosure)

The cross-sectional shape of the honeycomb structured body according to an embodiment of the disclosure is not limited to a round shape. The cross-sectional shape may be an elliptical shape, an elongated round shape, a racetrack shape, or the like.

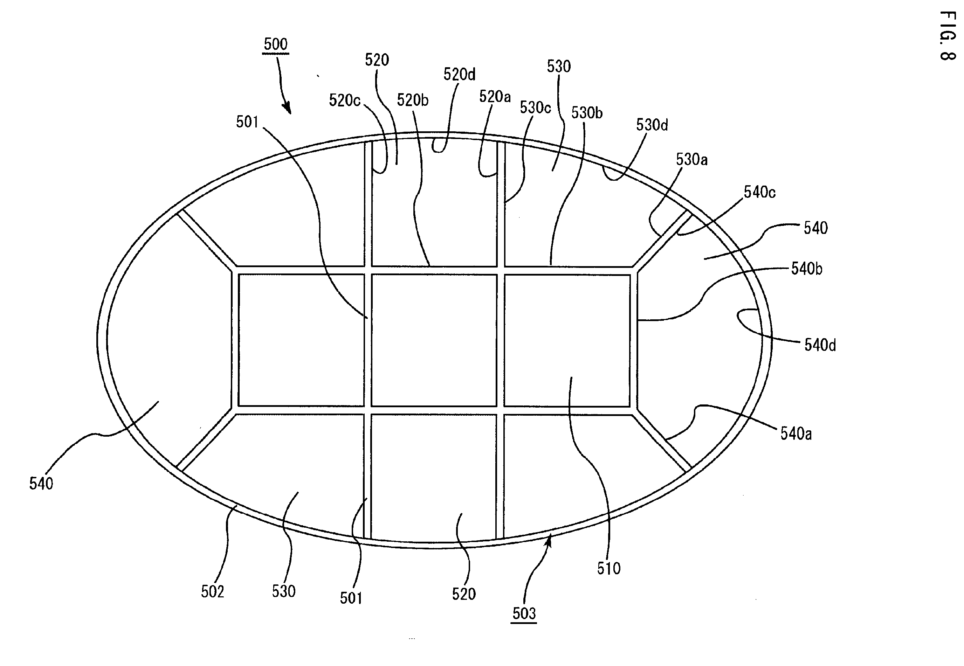

Fig. 8 is a cross-sectional view of a honeycomb structured body according to another embodiment of the disclosure. The cross-sectional shape of the honeycomb structured body illustrated in Fig. 8 is an elliptical shape.

A honeycomb structured body 500 shown in Fig. 8 has a structure in which a plurality of center-portion honeycomb fired bodies 510 and pluralities of peripheral-portion honeycomb fired bodies 520, 530 and 540 are combined with one another with an adhesive layer 501 interposed therebetween to form a ceramic block 503. Moreover, a coat layer 502 is formed on the periphery of the ceramic block 503.

The center-portion honeycomb fired body 510 has a square cross-sectional shape.

The cross section of each of the peripheral-portion honeycomb fired bodies 520 is formed into a shape surrounded by three line segments 520a, 520b and 520c and an elliptical arc 520d. The two angles made by two line segments out of these three line segments (an angle made by the line segments 520a and 520b and an angle made by the line segments 520b and 520c) are 90°.

The cross section of each of the peripheral-portion honeycomb fired bodies 530 is formed into a shape surrounded by three line segments 530a, 530b and 530c and an elliptical arc 530d. The two angles made by two line segments out of these three line segments (an angle made by the line segments 530b and 530c and an angle made by the line segments 530a and 530b) are 90° and 135°.

The cross section of each of the peripheral-portion honeycomb fired bodies 540 is formed into a shape surrounded by three line segments 540a, 540b and 540c and an elliptical arc 540d. The two angles made by two line segments out of these three line segments (an angle made by the line segments 540a and 540b and an angle made by the line segments 540b and 540c) are 135°.

The center-portion honeycomb fired body 510 is the same as the center-portion honeycomb fired body 110 used for the honeycomb structured body of the first embodiment.

The peripheral-portion honeycomb fired bodies 520, 530 and 540 have the same functions as that of the center-portion honeycomb fired body 110 used for the honeycomb structured body of the first embodiment although outer shapes of those peripheral-portion honeycomb fired bodies are different from that of the center-portion honeycomb fired body 110.

The honeycomb structured body 500 includes three pieces of the center-portion honeycomb fired bodies 510 combined with one another with the adhesive layer 501 interposed therebetween, two pieces of the peripheral-portion honeycomb fired bodies 520, four pieces of the peripheral-portion honeycomb fired bodies 530 and two pieces of the peripheral-portion honeycomb fired bodies 540. These peripheral-portion honeycomb fired bodies are located on the periphery of the three pieces of the center-portion honeycomb fired bodies 510. These honeycomb fired bodies are combined with one another with the adhesive layer 501 interposed therebetween so that the cross section of the honeycomb structured body 500 (ceramic block 503) is formed into an elliptical shape.

Here, in the honeycomb structured body 500, the cross-sectional area of each of the peripheral-portion honeycomb firedbodies 520, 530 and 540 is 0.9 to 1.3 times larger than the cross-sectional area of the center-portion honeycomb fired body 510.

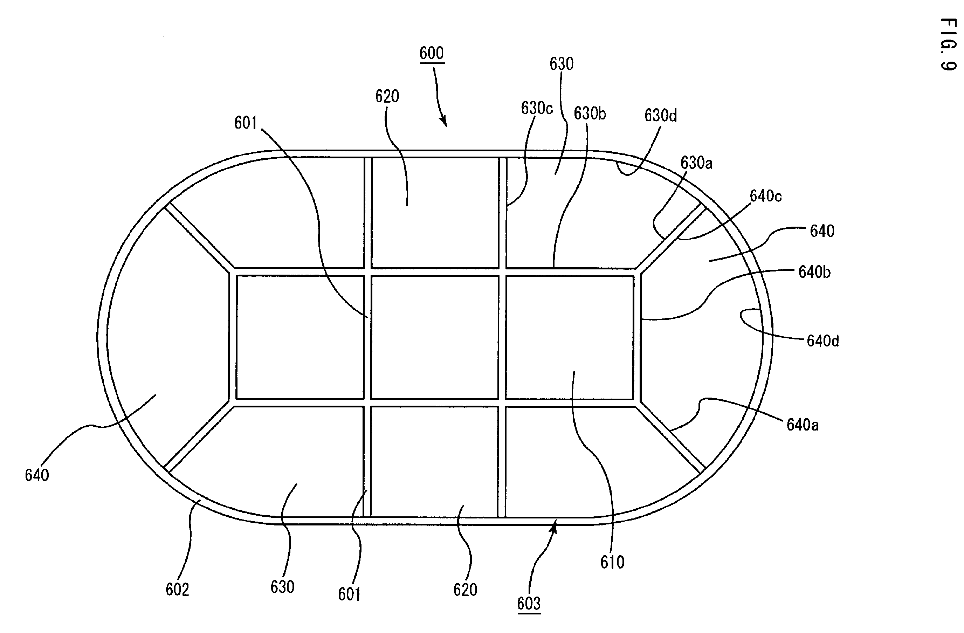

Fig. 9 is a cross-sectional view of a honeycomb structured body according to another embodiment of the disclosure.

The cross-sectional shape of the honeycomb structured body illustrated in Fig. 9 is a racetrack shape.

A honeycomb structured body 600 shown in Fig. 9 has a structure in which a plurality of center-portion honeycomb fired bodies 610 and pluralities of peripheral-portion honeycomb fired bodies 620, 630 and 640 are combined with one another with an adhesive layer 601 interposed therebetween to form a ceramic block 603. Moreover, a coat layer 602 is formed on the periphery of the ceramic block 603.

The center-portion honeycomb fired body 610 has a square cross-sectional shape.

The peripheral-portion honeycomb fired body 620 has a rectangular cross-sectional shape.

The cross section of the peripheral-portion honeycomb fired body 630 is formed into a shape surrounded by three line segments 630a, 630b and 630c, and a curve 630d formed by one straight line and an arc. The two angles made by two line segments out of these three line segments (an angle made by the line segments 630b and 630c and an angle made by the line segments 630a and 630b) are 90° and 135°.

The cross section of the peripheral-portion honeycomb fired body 640 is formed into a shape surrounded by three line segments 640a, 640b and 640c and an arc 640d. The two angles made by two line segments out of these three line segments (an angle made by the line segments 640a and 640b and an angle made by the line segments 640b and 640c) are 135°.

The center-portion honeycomb fired body 610 is the same as the center-portion honeycomb fired body 110 used for the honeycomb structured body of the first embodiment. The peripheral-portion honeycomb fired bodies 620, 630 and 640 have the same functions as that of the center-portion honeycomb fired body 110 used for the honeycomb structured body of the first embodiment although outer shapes of those peripheral-portion honeycomb fired bodies are different from that of the center-portion honeycomb fired body 110.

The honeycomb structured body 600 includes three pieces of the center-portion honeycomb fired bodies 610 combined with one another with adhesive layer 601 interposed therebetween, two pieces of the peripheral-portion honeycomb fired bodies 620, four pieces of the peripheral-portion honeycomb fired bodies 630 and two pieces of the peripheral-portion honeycomb fired bodies 640. These peripheral-portion honeycomb fired bodies are located on the periphery of the three pieces of the center-portion honeycomb fired bodies 610. These honeycomb fired bodies are combined with one another with the adhesive layer 601 interposed therebetween so that the cross section of the honeycomb structured body 600 (ceramic block 603) is formed into a racetrack shape.

Here, in the honeycomb structured body 600, the cross-sectional area of each of the peripheral-portion honeycomb firedbodies 620, 630 and 640 is 0.9 to 1.3 times larger than the cross-sectional area of the center-portion honeycomb fired body 610.

As mentioned above, the honeycomb structured body according to the embodiments of the disclosure may have an elliptical cross-sectional shape as shown in Fig. 8 or may have a racetrack cross-sectional shape as shown in Fig. 9.

Moreover, in the honeycomb structured body according to an embodiment of the disclosure, the number of the center-portion honeycomb fired bodies is not limited to plural but may be one.

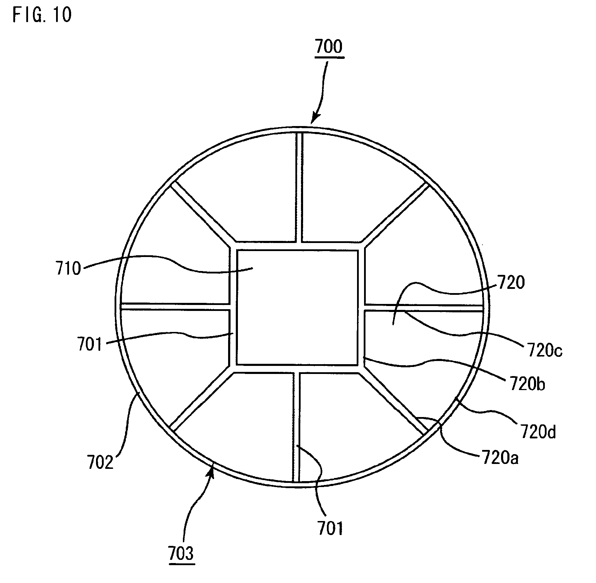

More specifically, the honeycomb structured body may have a cross-sectional shape as shown in Fig. 10.

Fig. 10 is a cross-sectional view of a honeycomb structured body according to another embodiment of the disclosure.

The honeycomb structured body 700 as illustrated in Fig. 10 has the same structure as that of the honeycomb structured body 100 of the first embodiment, except that the number of the center-portion honeycomb fired bodies is different.

That is, the honeycomb structured body 700 as illustrated in Fig. 10 comprises one center-portion honeycomb fired body 710, instead of four pieces of the honeycomb fired bodies 110 combined with one another with the adhesive layer 101 interposed therebetween in the honeycomb structured body 100 as illustrated in Fig. 1.

Compared with the center-portion honeycomb fired body 110, the center-portion honeycomb fired body 710 has a larger cross-sectional area but has the same functions.

The cross section of the peripheral-portion honeycomb fired body 720 in the honeycomb structured body 700 is formed into a shape surrounded by three line segments 720a, 720b and 720c, and an arc 720d. The two angles made by two line segments out of these three line segments (an angle made by the line segments 720b and 720c and an angle made by the line segments 720a and 720b) are 90° and 135°.

Here, the cross-sectional area of the peripheral-portion honeycomb fired body 720 is 0.9 to 1.3 times larger than that of the center-portion honeycomb fired body 710.

The honeycomb structured body 700 of such an embodiment can exert the same effects as those of the honeycomb structured body of the first embodiment of the disclosure.

Here, in Fig. 10, a reference numeral 701 represents an adhesive layer; a reference numeral 702 represents a coat layer; and a reference numeral 703 represents a ceramic block.

In the honeycomb structured body of the embodiments of the disclosure having a round cross-sectional shape, four or five pieces of the honeycomb fired bodies are preferably penetrated by one diameter in the cross section of the honeycomb structured body as well as another diameter that is orthogonal to the one diameter. The honeycomb structured bodies having such structure are suitably allowed to exert the effects of the present invention.

Upon counting the number of the honeycomb fired bodies penetrated by the one diameter or the another diameter, if at least one of the one diameter and the another diameter is entirely superposed on or partly overlaps with an adhesive layer, one piece of honeycomb fired body located on one side adjacent to the adhesive layer is counted as one piece of honeycomb fired body penetrated by the one or another diameter.

With respect to the honeycomb structured bodies of the embodiments of the disclosure explained above, in the honeycomb structured body of the first embodiment, four pieces of the honeycomb fired bodies are respectively superposed on the one diameter and the another diameter (see Fig. 4). In the honeycomb structured body of the second embodiment, five pieces of the honeycomb fired bodies are respectively superposed on the one diameter and the another diameter (see Fig. 6). In the honeycomb structured body of the embodiment shown in Fig. 10, three pieces of the honeycomb fired bodies are respectively superposed on the one diameter and the another diameter. Out of these three embodiments, the first and second embodiments are more preferable embodiments.

Referring to the drawings, the following description will discuss an embodiment of a honeycomb structured body according to the invention.

(First embodiment of the invention)

In the honeycomb structured body of the present embodiment, a cross-sectional area of a ceramic block is 10000 mm$^2$ or more and less than 25000 mm$^2$.

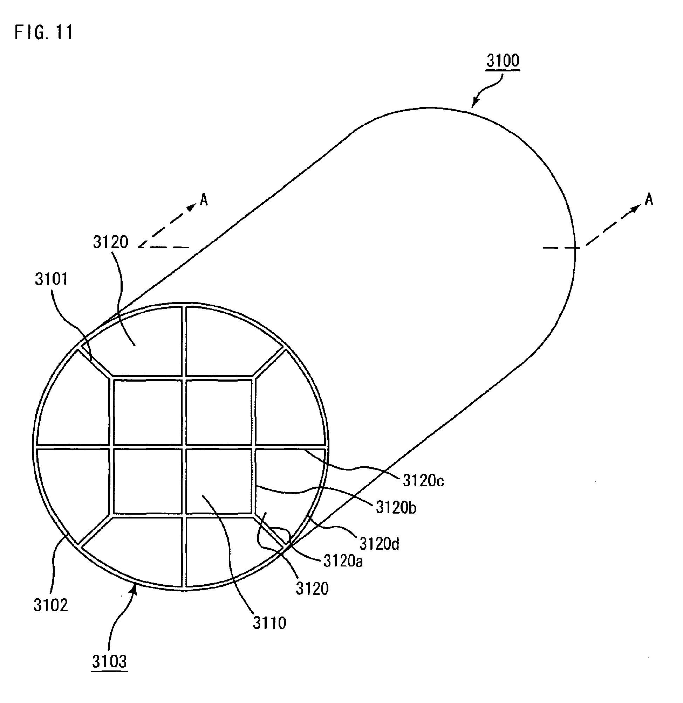

Fig. 11 is a perspective view schematically showing a honeycomb structured body according to the first embodiment of the invention.

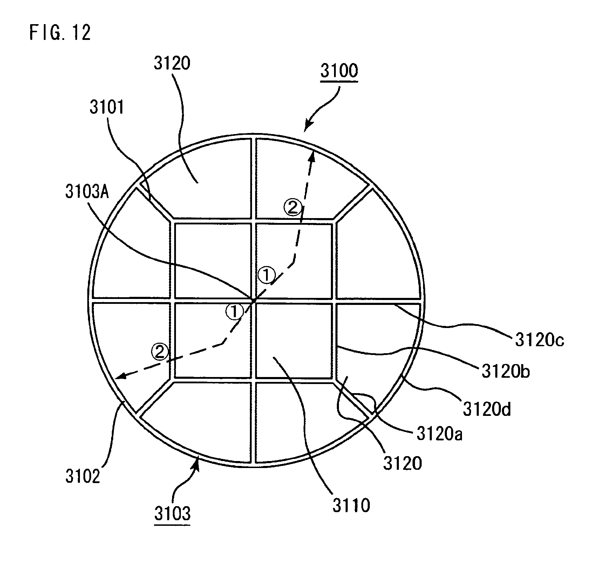

Fig. 12 is an A-A line cross-sectional view of the honeycomb structured body shown in Fig. 11.

The honeycomb structured body 3100 shown in Figs. 11 and 12 has a structure in which a plurality of honeycomb fired bodies 3110 and a plurality of honeycomb fired bodies 3120 are combined with one another with an adhesive layer 3101 interposed therebetween to form a ceramic block 3103. A coat layer 3102 is formed on the periphery of the ceramic block 3103.

The honeycomb fired body 3110 has almost the same shape as that of the center-portion honeycomb fired body 110 of the honeycomb structured body 100 according to the first embodiment of the disclosure, and comprises the same material as that thereof. The honeycomb fired body 3120 has almost the same shape as that of the peripheral-portion honeycomb fired body 120 of the honeycomb structured body 100 according to the first embodiment of the disclosure, and comprises the same material as that thereof.

In the honeycomb fired body 3110 and the honeycomb fired body 3120, either one end of each of the cells is sealed, so that the cell wall functions as a filter for capturing PM and the like.

As shown in Figs. 11 and 12, in the honeycomb structured body 3100, four pieces of the honeycomb fired bodies 3110 combined with one another with the adhesive layer 3101 interposed therebetween are located in the center portion of the cross section of the honeycomb structured body 3100, and eight pieces of the honeycomb fired bodies 3120 are located on the periphery of the four pieces of the honeycomb fired bodies 3110 so that the cross section of the honeycomb structured body 3100 (ceramic block 3103) is formed into a round shape.

In the cross section of the honeycomb structured body 3100, the number of the adhesive layers existing on a route which passes through the honeycomb fired bodies 3110 and 3120 and extends from the center of gravity 3103A of the ceramic block 3103 to the periphery of the ceramic block 3103 (see an arrow in Fig. 12) is two or less.

As mentioned above, in the case that the cross-sectional area of the ceramic block is 10000 or more and less than 25000 mm$^2$, and the number of the adhesive layers existing on a route which passes through the honeycomb fired bodies and extends from the center of gravity of the ceramic block to the periphery of the ceramic block in the cross section is two or less, the honeycomb structured body can exert the following effects:

the adhesive layer can alleviate thermal stress, and thus, it is possible to prevent occurrence of cracks and damages on the honeycomb structured body, and

the honeycomb structured body tends not to have a temperature distribution between the center portion and the peripheral portion of the honeycomb structured body, and thus, unburned particulates tend not to remain upon carrying out a regenerating process.

The honeycomb structured body according to the present embodiment can be manufactured by the same method for manufacturing the honeycomb structured body according to the first embodiment of the disclosure.

The following description will summarize the effects of the honeycomb structured body of the present embodiment.

(1) In the honeycomb structured body of the present embodiment, the cross-sectional area of the honeycomb fired body is 900 to 2500 mm$^2$, the cross-sectional area of the ceramic block is 10000 mm$^2$ or more and less than 25000 mm$^2$, and the number of the adhesive layers existing on a route which passes through the honeycomb fired bodies and extends from the center of gravity of the ceramic block to the periphery of the ceramic block in the cross section is two or less.

Thus, the honeycomb structured body can exert the following effects:

the adhesive layer can alleviate thermal stress, and thus, it is possible to prevent occurrence of cracks and damages on the honeycomb structured body; and

the honeycomb structured body tends not to have a temperature distribution between the center portion and the peripheral portion of the honeycomb structured body, and thus, unburned particulates tend not to remain upon carrying out a regenerating process.

(2) In the honeycomb fired body of the honeycomb structured body of the present embodiment, either one end of each of the cells is sealed with a plug. Therefore, the honeycomb structured body of the present embodiment can be preferably used as a diesel particulate filter.

(3) In the honeycomb structured body of the present embodiment, since the coat layer is formed on the peripheral side face of the ceramic block, it is possible to prevent leakage of particulates from the peripheral side face of the honeycomb structured body.

(4) In the honeycomb structured body of the present embodiment, since the ceramic block has a round cross-sectional shape, in the case that the cross-sectional area and the number of the adhesive layers existing on a route which extends from the center of gravity of the ceramic block to the periphery of the ceramic block in the cross section satisfy the above relationships, the effect that the honeycomb structured body tends not to have a temperature distribution between the center portion and the peripheral portion can be easily exerted.

(Example 4-1)

The following description will discuss an example that specifically discloses the first embodiment of the invention. Here, the invention is not limited to the examples.

(1) Honeycomb fired bodies were manufactured in the same manner as in the processes (1) to (3) of Example 1-1.

Thus, a honeycomb fired body 3110 comprising a silicon carbide sintered body and having a porosity of 45%, an average pore diameter of 15 $\mu$m, a size of 34.5 mm x 34.5 mm x 150 mm, the number of cells (cell density) of 300 pcs/inch$^2$, a thickness of cell walls of 0.25 mm (10 mil), and a cross-sectional area of 1190 mm$^2$ was manufactured. Also, a honeycomb fired body 3120 having the same porosity, the same average pore diameter, the same number of cells (cell density) and the same thickness of cell walls as those of the honeycomb fired body 3110 and also having a cross-sectional shape surrounded by three line segments and an arc, with the two angles, made by two line segments out of these three line segments, being 90° and 135° (line segment 3120a = 20.3 mm, line segment 3120b = 34.6 mm and line segment 3120c = 34.6 mm), and a cross-sectional area of 1293 mm$^2$ was manufactured.

(2) A honeycomb structured body 3100 with a coat layer 3102 formed on the periphery thereof was manufactured in the same manner as in the processes (4) and (5) of Example 1-1.

The honeycomb structured body 3100 has a round pillar shape with a size of 143.8 mm in diameter x 150 mm in length.

The cross-sectional shape of the honeycomb structured body manufactured in Example 4-1 is shown in Fig. 12. The cross-sectional area of the honeycomb fired body 3110 is 1190 mm$^2$, the cross-sectional area of the honeycomb fired body 3120 is 1293 mm$^2$, the cross-sectional area of the ceramic block 3103 is 16151 mm$^2$, and the number of the adhesive layers existing on a route which passes through the honeycomb fired bodies 3110 and 3120 and extends from the center of gravity 3103A of the ceramic block 3103 to the periphery of the ceramic block 3103 in the cross section is two.

(Comparative Example 4-1)

A honeycomb structured body same as that in Comparative Example 1-1 was manufactured.

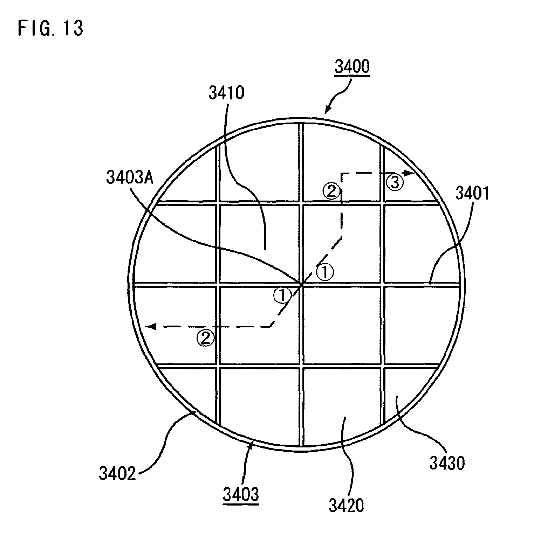

The cross-sectional shape of the honeycomb structured body manufactured in Comparative Example 4-1 is shown in Fig. 13.
Fig. 13 is a cross-sectional view that shows the honeycomb structured body 3400 manufactured in Comparative Example 4-1, and in Fig. 13, reference numerals 3410, 3420, and 3430 represent honeycomb fired bodies, a reference numeral 3401 represents an adhesive layer, a reference numeral 3402 represents a coat layer and a reference numeral 3403 represents a ceramic block.
The cross-sectional area of the honeycomb fired body 3410 is 1190 mm$^2$, the cross-sectional area of the honeycomb fired body 3420 is 1095 mm$^2$, the cross-sectional area of the honeycomb fired body 3430 is 357 mm$^2$, the cross-sectional area of the ceramic block 3403 is 16151 mm$^2$, and the number of the adhesive layers existing on a route which passes through the honeycomb fired bodies 3410, 3420, and 3430 and extends from the center of gravity 3403A of the ceramic block 3403 to the periphery of the ceramic block 3403 in the cross section is three, while the number of the adhesive layers existing on a route which passes through the honeycomb fired bodies 3410 and 3420 and extends from the center of gravity 3403A of the ceramic block 3403 to the periphery of the ceramic block 3403 in the cross section is two.

(Evaluation of honeycomb structured body)

Evaluated in the same manner as in Example 1-1, the regenerating rate of the honeycomb structured body of Example 4-1 was 85%, and the regenerating rate of the honeycomb structured body of Comparative Example 4-1 was 70%.

The reason of this is presumably because a large amount of unburned particulates remained upon carrying out the regenerating process on the honeycomb structured body of Comparative Example 4-1.

(Second embodiment of The invention)

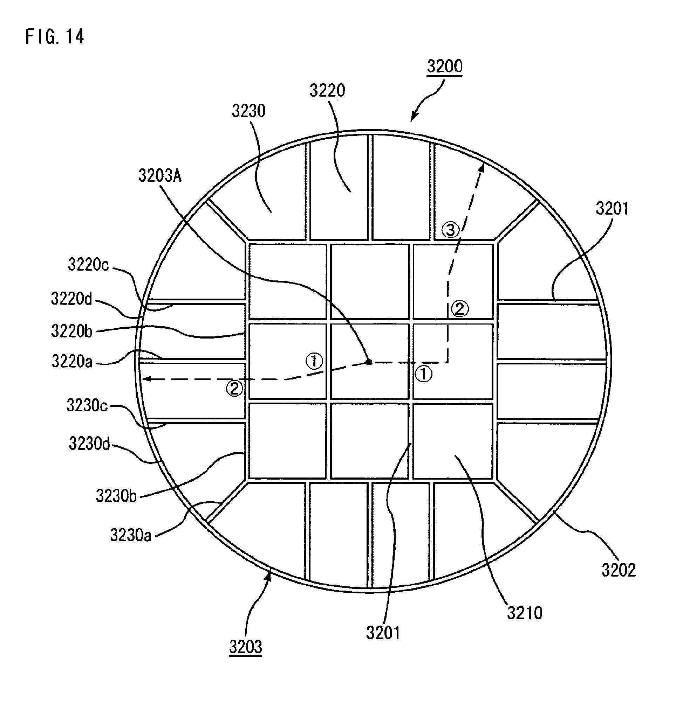

Fig. 14 is a cross-sectional view of a honeycomb structured body according to the second embodiment of the invention.

In the honeycomb structured body 3200 of the present embodiment, a cross-sectional area of a ceramic block 3203 is 25000 mm$^2$ or more and less than 40000 mm$^2$.

As shown in Fig. 14, the honeycomb structured body 3200 of the present embodiment has a structure in which pluralities of honeycomb fired bodies 3210, 3220 and 3230 are combined with one another with an adhesive layer 3201 interposed therebetween to form a ceramic block 3203. A coat layer 3202 is formed on the periphery of the ceramic block 3203.

The honeycomb fired bodies 3210 has almost the same shape as that of the center-portion honeycomb fired bodies 210 of the honeycomb structured body 200 according to the second embodiment of the disclosure, and comprises the same material as that thereof. The honeycomb fired bodies 3220 and 3230 have almost the same shape as those of the peripheral-portion honeycomb fired bodies 220 and 230 respectively of the honeycomb structured body 200 according to the second embodiment of the disclosure, and comprise the same material as those thereof.

Further, a cross-sectional area of each of the honeycomb fired bodies 3210, 3220 and 3230 is 900 to 2500 mm$^2$.

As shown in Fig. 14, in the honeycomb structured body 3200, nine pieces of the honeycomb fired bodies 3210 combined with one another with the adhesive layer 3201 interposed therebetween are located in the center portion of the cross section of the honeycomb structured body 3200, and eight pieces of the honeycomb fired bodies 3220 and eight pieces of the honeycomb fired bodies 3230 are located on the periphery of the nine pieces of the honeycomb fired bodies 3210 so that the cross section of the honeycomb structured body 3200 (ceramic block 3203) is formed into a round shape.

In the cross section of the honeycomb structured body 3200, the number of the adhesive layers existing on a route which passes through the honeycomb fired bodies 3210 and 3220 and extends from the center of gravity 3203A of the ceramic block 3203 to the periphery of the ceramic block 3203 (see an arrow in Fig. 14) is two.

In the cross section of the honeycomb structured body 3200, the number of the adhesive layers existing on a route which passes through the honeycomb fired bodies 3210 and 3230 and extends from the center of gravity 3203A of the ceramic block 3203 to the periphery of the ceramic block 3203 (see an arrow in Fig. 14) is three.

As mentioned above, in the case that the cross-sectional area of the ceramic block is 25000 mm$^2$ or more and less than 40000 mm$^2$, and the number of the adhesive layers existing on a route which passes through the honeycomb fired bodies and extends from the center of gravity of the ceramic block to the periphery of the ceramic block in the cross section is three or less, the honeycomb structured body can exert the following effects:

the adhesive layer can alleviate thermal stress, and thus, it is possible to prevent occurrence of cracks and damages on the honeycomb structured body; and
the honeycomb structured body tends not to have a temperature distribution between the center portion and the peripheral portion, and thus, unburned particulates tend not to remain upon carrying out a regenerating process.

The honeycomb structured body according to the present embodiment can be manufactured by the same method for manufacturing the honeycomb structured body according to the second embodiment of the disclosure.
The honeycomb structured body of the present embodiment can exert the same effects as those of the honeycomb structured body of the first embodiment of the invention.

(Example 4-2)

The following description will discuss an example that specifically discloses the second embodiment of the invention. Here, the invention is not limited to the example.
(1) Honeycomb fired bodies were manufactured in the same manner as in the processes (1) to (3) of Example 1-4.

Thus, a honeycomb fired body 3210 comprising a silicon carbide sintered body and having a porosity of 45%, an average pore diameter of 15 $\mu$m, a size of 34.5 mm $\times$ 34.5 mm $\times$ 200 mm, the number of cells (cell density) of 300 pcs/inch$^2$, a thickness of cell walls of 0.25 mm (10 mil), and a cross-sectional area of 1190 mm$^2$ was manufactured.
Also, a honeycomb fired body 3220 having the same porosity, the same average pore diameter, the same number of cells (cell density) and the same thickness of cell walls as those of the honeycomb fired body 3210 and also having a cross-sectional shape surrounded by three line segments and an arc, with the two angles, made by two line segments out of these three line segments, being 90° (line segment 3220a = 45.6 mm, line segment 3220b = 26.8 mm and line segment 3220c = 41.8 mm), and a cross-sectional area of 1226 mm$^2$ was manufactured.

Further, a honeycomb fired body 3230 having the same porosity, the same average pore diameter, the same number of cells (cell density) and the same thickness of cell walls as those of the honeycomb fired body 3210 and also having a cross-sectional shape surrounded by three line segments and an arc, with the two angles, made by two line segments out of these three line segments, being 90° and 135° (line segment 3230a = 24.9 mm, line segment 3230b = 24.5 mm and line segment 3230c = 41.8 mm), and a cross-sectional area of 1226 mm$^2$ was manufactured.

(2) A honeycomb structured body 3200 with a coat layer 3202 formed on the periphery thereof was manufactured in the same manner as in the processes (4) and (5) of Example 1-4.

In the honeycomb structured body 3200, a cross-sectional area of the ceramic block is 32302 mm$^2$. The honeycomb structured body 3200 has a round pillar shape with a size of 203.2 mm in diameter x 200 mm in length.

The cross-sectional shape of the honeycomb structured body manufactured in Example 4-2 is shown in Fig. 14. The cross-sectional area of the honeycomb fired body 3210 is 1190 mm$^2$, the cross-sectional area of the honeycomb fired body 3220 is 1226 mm$^2$, the cross-sectional area of the honeycomb fired body 3230 is 1226 mm$^2$, the cross-sectional area of the ceramic block 3203 is 32302 mm$^2$, the number of the adhesive layers existing on a route which passes through the honeycomb fired bodies 3210 and 3220 and extends from the center of gravity 3203A of the ceramic block 3203 to the periphery of the ceramic block 3203 in the cross section is two, and the number of the adhesive layers existing on a route which passes through the honeycomb fired bodies 3210 and 3230 and extends from the center of gravity 3203A of the ceramic block 3203 to the periphery of the ceramic block 3203 in the cross section is three.

(Comparative Example 4-2)

(1) By carrying out the same process as the process (1) of Example 4-1, a honeycomb fired body comprising a silicon carbide sintered body and having a porosity of 45%, an average pore diameter of 15 $\mu$m, a size of 34.5 mm $\times$ 34.5 mm $\times$ 200 mm, the number of cells (cell density) of 300 pcs/inch$^2$, a thickness of cell walls of 0.25 mm (10 mil), and a cross-sectional area of 1190 mm$^2$ was manufactured.

(2) An adhesive paste was applied to a predetermined side face of the honeycomb fired body, and 32 pieces of the honeycomb fired bodies were bonded to one another with the adhesive paste interposed therebetween. The adhesive paste was solidified at 180°C in 20 minutes to manufacture an aggregated body of the honeycomb fired bodies having a rectangular pillar shape, with the thickness of the adhesive layer being 1 mm.

Here, as the adhesive paste, the same adhesive paste as that used in Example 1-1 was used.

(3) Next, the periphery of the aggregated body of the honeycomb fired bodies was cut by using a diamond cutter to manufacture a round pillar-shaped ceramic block having a cross-sectional area of 32302 mm$^2$.

Subsequently, a coating material paste layer was formed on the periphery of the ceramic block by using the coating material paste made of the same material as that of the adhesive paste. Further, this coating material paste layer was dried at a temperature of 120°C to manufacture a round pillar-shaped honeycomb structured body having a size of 203.2 mm in diameter x 200 mm in length, with a coat layer formed on the periphery thereof.

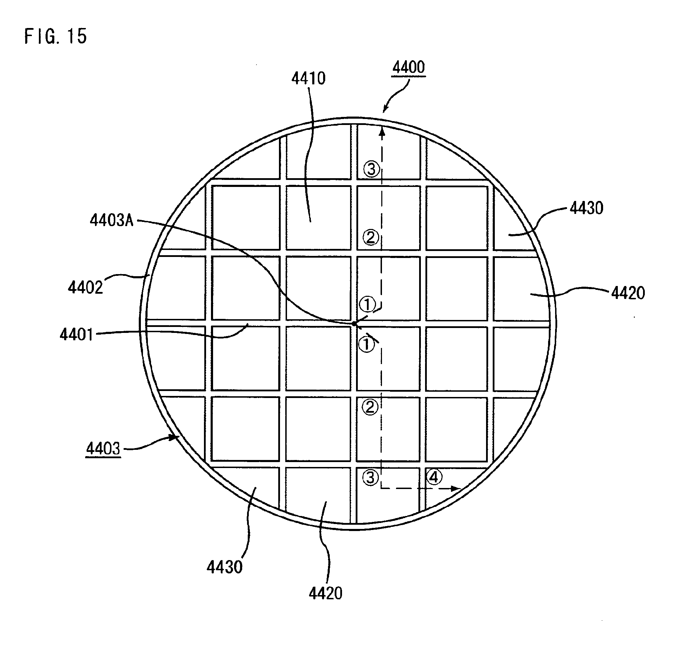

The cross-sectional shape of the honeycomb structured body manufactured in Comparative Example 4-2 is shown in Fig. 15.

Fig. 15 is a cross-sectional view that shows the honeycomb structured body 4400 manufactured in Comparative Example 4-2, and in Fig. 15, reference numerals 4410, 4420, and 4430 represent honeycomb fired bodies, a reference numeral 4401 represents an adhesive layer, a reference numeral 4402 represents a coat layer and a reference numeral 4403 represents a ceramic block.

The cross-sectional area of the ceramic block 4403 is 32302 mm$^2$, the number of the adhesive layers existing on a route which passes through the honeycomb fired bodies 4410 and 4420 and extends from the center of gravity 4403A of the ceramic block 4403 to the periphery of the ceramic block 4403 in the cross section is three, and the number of the adhesive layers existing on a route which passes through the honeycomb fired bodies 4410 and 4430 and extends from the center of gravity 4403A of the ceramic block 4403 to the periphery of the ceramic block 4403 in the cross section is four.

Evaluated in the same manner as in Example 1-4, the regenerating rate of the honeycomb structured body of Example 4-2 was 82%, and the regenerating rate of the honeycomb structured body of Comparative Example 4-2 was 65%.

(Third embodiment of The invention)

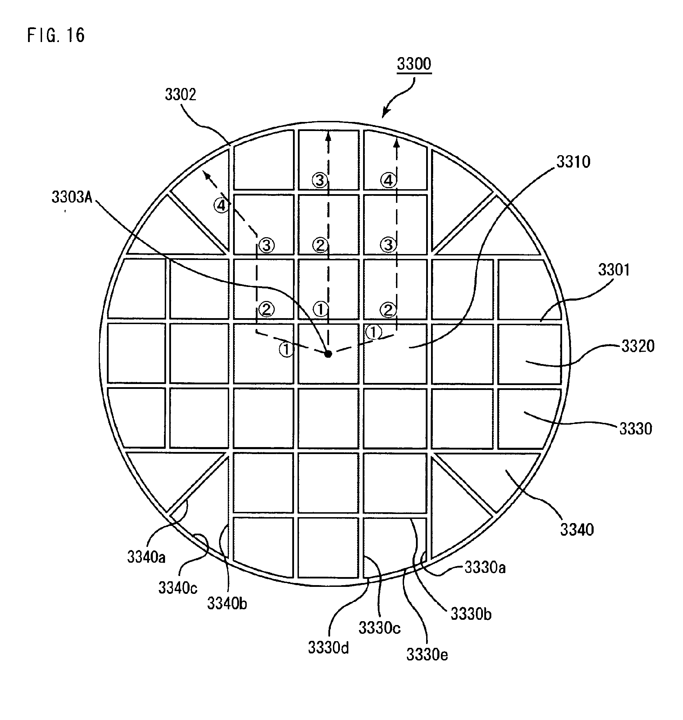

Fig. 16 is a cross-sectional view of a honeycomb structured body according to the third embodiment of the invention.

In the honeycomb structured body 3300 of the present embodiment, a cross-sectional area of a ceramic block 3303 is 40000 mm$^2$ or more and 55000 mm$^2$ or less.

As shown in Fig. 16, the honeycomb structured body 3300 of the present embodiment has a structure in which pluralities of honeycomb fired bodies 3310, 3320, 3330 and 3340 are combined with one another with an adhesive layer 3301 interposed therebetween to form a ceramic block 3303. A coat layer 3302 is formed on the periphery of the ceramic block 3303.

The cross section of each of the honeycomb fired bodies 3310 and 3320 has a square shape.

The cross section of the honeycomb fired body 3330 has a shape surrounded by four line segments 3330a, 3330b, 3330c, and 3330d and one arc 3330e, and all angles formed by two line segments of the four line segments (an angle formed by the line segments 3330a and 3330b, an angle formed by the line segments 3330b and 3330c, and an angle formed by the line segments 3330c and 3330d) are 90°.

The cross section of the honeycomb fired body 3340 has a shape surrounded by two line segments 3340a and 3340b and one arc 3340c, and the angle formed by the two line segments (the angle formed by the line segments 3340a and 3340b) is 45°.

That is, the honeycomb fired bodies 3310 and 3320 are the same as the honeycomb fired body 3110 used for the honeycomb structured body according to the first embodiment of the invention. The honeycomb fired bodies 3330 and 3340 have the same functions as that of the honeycomb fired body 3110 of the honeycomb structured body according to the first embodiment of the invention, although the outer shapes of the honeycomb fired bodies 3330 and 3340 are different from that of the honeycomb fired body 3110.

The cross-sectional area of each of the honeycomb fired bodies 3310, 3320, 3330, and 3340 is 900 to 2500 mm$^2$.

Further, the honeycomb fired bodies 3310, 3320, 3330, and 3340 comprise a porous silicon carbide sintered body.

As shown in Fig. 16, in the honeycomb structured body 3300, 21 pieces of the honeycomb fired bodies 3310 combined with one another with the adhesive layer 3301 interposed therebetween are located near the center of the cross section of the honeycomb structured body 3300, and four pieces of the honeycomb fired bodies 3320, eight pieces of the honeycomb fired bodies 3330, and eight pieces of the honeycomb fired bodies 3340 are located on the periphery of the 21 pieces of the honeycomb fired bodies 3310. These honeycomb fired bodies are combined with one another with the adhesive layer 3301 interposed therebetween so that the cross section of the ceramic block 3303 is formed into a round shape.

In the cross section of the honeycomb structured body 3300, the number of the adhesive layers existing on a route which passes through the honeycomb fired bodies 3310 and 3320 and extends from the center of gravity 3303A of the ceramic block 3303 to the periphery of the ceramic block 3303 (see an arrow in Fig. 16) is three.

In the cross section of the honeycomb structured body 3300, the number of the adhesive layers existing on a route which passes through the honeycomb fired bodies 3310 and 3330 and extends from the center of gravity 3303A of the ceramic block 3303 to the periphery of the ceramic block 3303 (see an arrow in Fig. 16) is four.

In the cross section of the honeycomb structured body 3300, the number of the adhesive layers existing on a route which passes through the honeycomb fired bodies 3310 and 3340 and extends from the center of gravity 3303A of the ceramic block 3303 to the periphery of the ceramic block 3303 (see an arrow in Fig. 16) is four.

As mentioned above, in the case that the cross-sectional area of the ceramic block is 40000 mm$^2$ or more and 55000 mm$^2$ or less, and the number of the adhesive layers existing on a route which passes through the honeycomb fired bodies and extends from the center of gravity of the ceramic block to the periphery of the ceramic block in the cross section is four or less, the honeycomb structured body can exert the following effects:

the adhesive layer can alleviate thermal stress, and thus, it is possible to prevent occurrence of cracks and damages on the honeycomb structured body, and
the honeycomb structured body tends not to have a temperature distribution between the center portion and the peripheral portion, and thus, unburned particulates tend not to remain upon carrying out a regenerating process.

The following description will discuss a method for manufacturing a honeycomb structured body of the present embodiment.

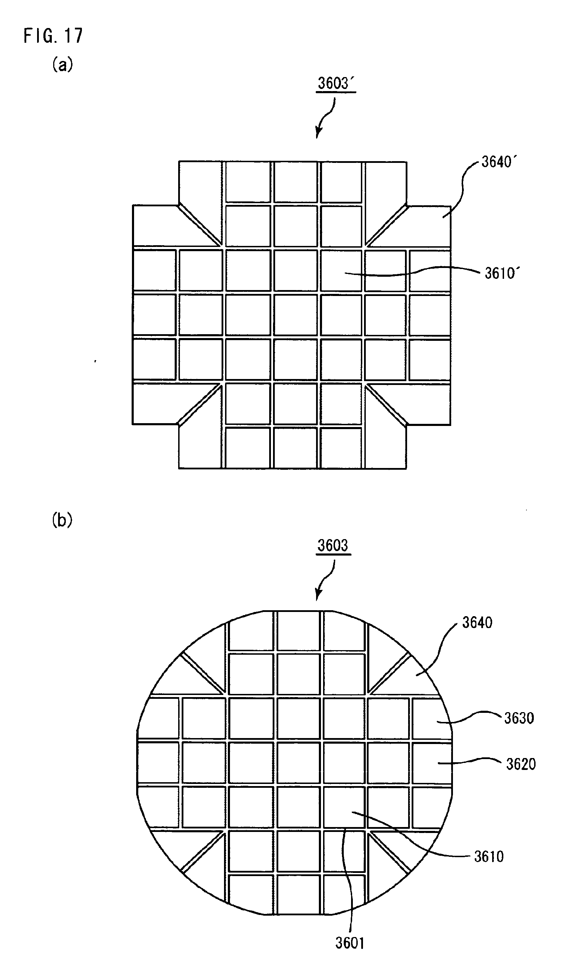

Figs. 17(a) and 17(b) are cross-sectional views for describing an example of a method for manufacturing a honeycomb structured body according to the third embodiment of the invention.

(1) Honeycomb fired bodies with either one end of each of the cells sealed are manufactured by the same method as in the processes (1) to (3) of the first embodiment of the disclosure.

At this time, a honeycomb fired body 3610 having a square cross-sectional shape and a honeycomb fired body 3640' having a trapezoid cross-sectional shape are manufactured (see Fig. 17(a)).

(2) Next, in the same manner as in the process (4) of the first embodiment of the disclosure, the honeycomb fired bodies 3610 and the honeycomb fired bodies 3640' are combined with one another with the adhesive paste layer interposed therebetween so as to be arranged as shown in Fig. 17(a). Further, the adhesive paste layer is solidified to manufacture an aggregated body of the honeycomb fired bodies 3603'.

(3) Next, a periphery cutting process is carried out in which the side face of the aggregated body of the honeycomb fired bodies 3603' is cut by using a diamond cutter or the like to form a round pillar shape so as to manufacture a ceramic block 3603 in which the honeycomb fired bodies 3610, 3620, 3630 and 3640 are combined with one another with the adhesive layer 3601 interposed therebetween (see Fig. 17(b)).

Then, if needed, a coat layer (not illustrated) is formed on the peripheral side face of the ceramic block 3603 to complete a honeycomb structured body 3600.

The honeycomb structured body of the present embodiment can exert the same effects as those of the honeycomb structured body of the first embodiment of the invention.

(Example 4-3)

The following description will discuss an example that more specifically discloses the third embodiment of the invention. However, the invention is not limited to the Example.

(1) By carrying out the same method as the molding process (1) of Example 1-1, raw honeycomb molded bodies having almost the same shapes as those of the honeycomb fired body 3610 and honeycomb fired body 3640', shown in Fig. 17(a), with no cells sealed, were manufactured.

(2) Next, the raw honeycomb molded bodies were dried by using a microwave drying apparatus to obtain a dried honeycomb molded bodies. A paste having the same composition as that of the wet mixture was then filled into predetermined cells, and the dried honeycomb molded bodies were again dried by using a drying apparatus.

(3) The dried honeycomb molded bodies were degreased at 400°C, and then fired at 2200°C under normal pressure argon atmosphere for three hours.

Thus, a honeycomb fired body 3610 comprising a silicon carbide sintered body and having a porosity of 45%, an average pore diameter of 15 $\mu$m, a size of 34.5 mm $\times$ 34.5 mm $\times$ 250 mm, the number of cells (cell density) of 300 pcs/inch$^2$, a thickness of cell walls of 0.25 mm (10 mil), and a cross-sectional area of 1190 mm$^2$ was manufactured.

Also, a honeycomb fired body 3640' having the same porosity, the same average pore diameter, the same number of cells (cell density) and the same thickness of cell walls as those of the honeycomb fired body 3610 and also having a trapezoidal cross-sectional shape (upper parallel side = 35.5 mm, lower parallel side = 70.0 mm, height = 34.5 mm) was manufactured.

EP 2 196 645 B1

(4) An adhesive paste was applied to a predetermined side face of each of the honeycomb fired bodies 3610 and 3640' , and 33 pieces of the honeycomb fired bodies 3610 and eight pieces of the honeycomb fired bodies 3640' were bonded to one another with the adhesive paste interposed therebetween so as to be arranged as shown in Fig. 17 (a). The adhesive paste was solidified at 180°C in 20 minutes to manufacture an aggregated body of the honeycomb fired bodies 3603'.

Next, the periphery of the aggregated body of the honeycomb fired bodies 3603' was cut by using a diamond cutter to manufacture an almost round pillar-shaped ceramic block 3603 having the cross-sectional area of 49400 mm$^2$.
With respect to the adhesive paste, the adhesive paste used in Example 1-1 was used.
(5) By using a coating material paste having the same composition as that of the adhesive paste used in the process (4), a coating material paste layer was formed on the periphery of the ceramic block 3603. Thereafter, the coating material paste layer was dried at 120°C to manufacture a round pillar-shaped honeycomb structured body having a size of 254 mm in diameter x 250 mm in length with a coat layer formed on the periphery thereof.

The cross-sectional shape of the honeycomb structured body manufactured in Example 4-3 is shown in Fig. 16. The cross-sectional area of the honeycomb fired body 3310 is 1190 mm$^2$, the cross-sectional area of the honeycomb fired body 3320 is 1190 mm$^2$, the cross-sectional area of the honeycomb fired body 3330 is 1066 mm$^2$, the cross-sectional area of the honeycomb fired body 3340 is 1093 mm$^2$, the cross-sectional area of the ceramic block 3303 is 49400 mm$^2$, the number of the adhesive layers existing on a route which passes through the honeycomb fired bodies 3310 and 3320 and extends from the center of gravity 3303A of the ceramic block 3303 to the periphery of the ceramic block 3303 in the cross section is three, the number of the adhesive layers existing on a route which passes through the honeycomb fired bodies 3310 and 3330 and extends from the center of gravity 3303A of the ceramic block 3303 to the periphery of the ceramic block 3303 in the cross section is four, and the number of the adhesive layers existing on a route which passes through the honeycomb fired bodies 3310 and 3340 and extends from the center of gravity 3303A of the ceramic block 3303 to the periphery of the ceramic block 3303 in the cross section is four.

(Comparative Example 4-3)

(1) By carrying out the same process as the process (1) of Example 4-2, a honeycomb fired body comprising a silicon carbide sintered body and having a porosity of 45%, an average pore diameter of 15 μm, a size of 34.5 mm × 34.5 mm × 250 mm, the number of cells (cell density) of 300 pcs/inch$^2$, a thickness of cell walls of 0.25 mm (10 mil), and a cross-sectional area of 1190 mm$^2$ was manufactured.

(2) An adhesive paste was applied to a predetermined side face of the honeycomb fired body, and 52 pieces of the honeycomb fired bodies were bonded to one another with the adhesive paste interposed therebetween. The adhesive paste was solidified at 180°C in 20 minutes to manufacture an aggregated body of the honeycomb fired bodies having a rectangular pillar-shape, with the thickness of the adhesive layer being 1 mm.

Here, as the adhesive paste, the same adhesive paste as that used in Example 1-1 was used.
(3) Next, the periphery of the aggregated body of the honeycomb fired bodies was cut by using a diamond cutter to manufacture a round pillar-shaped ceramic block having a cross-sectional area of 50511 mm$^2$.

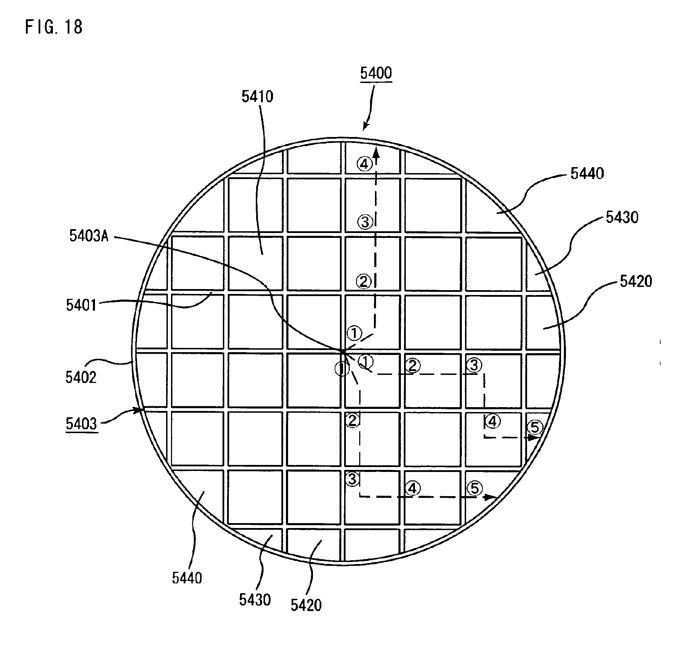

Subsequently, a coating material paste layer was formed on the periphery of the ceramic block by using the coating material paste made of the same material as that of the adhesive paste.
Further, this coating material paste layer was dried at a temperature of 120°C to manufacture a round pillar-shaped honeycomb structured body having a size of 254.2 mm in diameter x 250 mm in length.
The cross-sectional shape of the honeycomb structured body manufactured in Comparative Example 4-3 is shown in Fig. 18.
Fig. 18 is a cross-sectional view that shows the honeycomb structured body 5400 manufactured in Comparative Example 4-3, and in Fig. 18, reference numerals 5410, 5420, 5430, and 5440 represent honeycomb fired bodies, a reference

23

numeral 5401 represents an adhesive layer, a reference numeral 5402 represents a coat layer and a reference numeral 5403 represents a ceramic block.

The cross-sectional area of the honeycomb fired body 5410 is 1190 mm$^2$, the cross-sectional area of the ceramic block 5403 is 50511 mm$^2$, the number of the adhesive layers existing on a route which passes through the honeycomb fired bodies 5410 and 5420 and extends from the center of gravity 5403A of the ceramic block 5403 to the periphery of the ceramic block 5403 in the cross section is four, the number of the adhesive layers existing on a route which passes through the honeycomb fired bodies 5410 and 5430 and extends from the center of gravity 5403A of the ceramic block 5403 to the periphery of the ceramic block 5403 in the cross section is five, and the number of the adhesive layers existing on a route which passes through the honeycomb fired bodies 5410 and 5440 and extends from the center of gravity 5403A of the ceramic block 5403 to the periphery of the ceramic block 5403 in the cross section is five.

Evaluated in the same manner as in Example 1-1 except that an 8L engine was used instead of the 2L engine, the regenerating rate of the honeycomb structured body of Example 4-3 was 85%. Further, the regenerating rate of the honeycomb structured body of Comparative Example 4-3 was 72%.

(Other embodiments of The invention)

The honeycomb structured body according to each of the first and second embodiments of the invention may be manufactured in the same manner as in, for example, the third embodiment of the disclosure.

The cross-sectional shape of the honeycomb structured body according to the embodiments of the invention is not limited to a round shape. The cross-sectional shape may be an elliptical shape, an elongated round shape, racetrack shape, or the like.

(Other embodiments of the invention and the disclosure)

As mentioned above, the honeycomb structured body with either one end of each of the cells sealed was described as the honeycomb structured body according to each of the embodiments of the invention and the disclosure; however, in the honeycomb structured body according to each of the embodiments of the invention and the disclosure, each of the cells is not necessarily sealed at either one end. The honeycomb structured body of this kind can be used as a catalyst supporting carrier.

The shape of each of the honeycomb fired bodies of the honeycomb structured body according to each of the embodiments of the invention and the disclosure is not particularly limited. The shape is preferably a shape which makes it easy to combine the honeycomb fired bodies with one another with the adhesive layer interposed therebetween to manufacture a honeycomb structured body, and examples of the cross-sectional shape thereof include a square shape, a rectangular shape, a hexagonal shape, a sector shape, and the like.

In the honeycomb structured body according to each of the embodiments of the invention and the disclosure, examples of the inorganic binder contained in the adhesive paste include silica sol, alumina sol, and the like. Each of these may be used alone, or two or more of these may be used in combination. Out of the inorganic binders, silica sol is preferably used.

Examples of the inorganic particles contained in the adhesive paste include carbides, nitrides, and the like, and more specifically, inorganic powder made from silicon carbide, silicon nitride, boron nitride and the like. Each of these may be used alone, or two or more kinds of these may be used in combination. Out of the inorganic particles, silicon carbide is preferably used due to its superior thermal conductivity.

Examples of at least one of the inorganic fibers and whiskers contained in the adhesive paste include at least one of inorganic fibers and whiskers made of silica-alumina, mullite, alumina, silica or the like. Each of these materials may be used alone, or two or more of these may be used in combination. Out of the inorganic fibers, alumina fibers are preferably used.

Although not particularly limited, a porosity of the honeycomb fired body of the honeycomb structured body according to each of the embodiments of the invention and the disclosure is preferably 35 to 60%.
When the honeycomb structured body is used as a filter, the porosity of less than 35% tends to cause clogging in the honeycomb structured body. In contrast, the porosity exceeding 60% tends to cause a reduction in the strength of the honeycomb fired body, resulting in easy breakage.

The average pore diameter of the honeycomb fired body of the honeycomb structured body according to each of the embodiments of the invention and the disclosure is preferably 5 to 30 μm.
When the honeycomb structured body is used as a filter, the average pore diameter of less than 5 μm tends to easily cause clogging of particulates. In contrast, the average pore diameter exceeding 30 μm tends to allow particulates to easily pass through the pores. As a result, the honeycomb fired body may fail to capture the particulates, and thus, the honeycomb structured body may fail to function as a filter.

Here, the porosity and the average pore diameter can be measured by conventionally known methods such as a mercury porosimetry, Archimedes method, and a measuring method using a scanning electronic microscope (SEM).

The cell density in the cross-section perpendicular to the longitudinal direction of the honeycomb fired body constituting the honeycomb structured body according to each of the embodiments of the invention and the disclosure is not is not particularly limited. However, a preferable lower limit thereof is 31.0 pcs/cm$^2$ (200 pcs/inch$^2$) and a preferable upper limit is 93.0 pcs/cm$^2$ (600 pcs/inch$^2$). A more preferable lower limit is 38.8 pcs/cm$^2$ (250 pcs/inch$^2$) and a more preferable upper limit is 77.5 pcs/cm$^2$ (500 pcs/inch$^2$).

Further, the thickness of the cell walls of the honeycomb fired body constituting the honeycomb structured body is not particularly limited, and preferably 0.1 to 0.4 mm.

The main component of the honeycomb fired body constituting the honeycomb structured body according to each of the embodiments of the invention and the disclosure is not limited to silicon carbide, and may be powders of the following ceramics: nitride ceramics such as aluminum nitride, silicon nitride, boron nitride, and titanium nitride; carbide ceramics such as zirconium carbide, titanium carbide, tantalum carbide, and tungsten carbide; oxide ceramics such as cordierite, aluminum titanate; and the like.

Out of these components, non-oxide ceramics are preferable, and silicon carbide is particularly preferable. This is because they are excellent in thermal resistance, mechanical strength, thermal conductivity and the like. Moreover, ceramic materials such as silicon-containing ceramics, in which the above-mentioned ceramic is blended with metallic silicon, and ceramics bonded by silicon or silicate compounds can also be used as the constitutional material. Out of these, silicon carbide blended with metallic silicon (silicon-containing silicon carbide) is preferable.

In particular, ceramics of silicon-containing silicon carbide including 60% by weight or more of silicon carbide are preferable.

The particle diameter of the ceramic powder is not particularly limited, and the silicon carbide powder that tends not to cause the case where the size of the honeycomb fired body manufactured by the following firing treatment becomes smaller than that of the honeycomb molded body after degreased is preferable.

With respect to the wet mixture prepared upon manufacturing the honeycomb structured body according to each of the embodiments of the invention and the disclosure, the organic binder to be mixed in the wet mixture is not particularly limited, and examples thereof include methyl cellulose, carboxymethyl cellulose, hydroxyethyl cellulose, polyethylene glycol, and the like. Methyl cellulose is preferable out of these. The binder is preferably blended at a ratio of 1 to 10 parts by weight per 100 parts by weight of the ceramic powder.

The plasticizer to be mixed in the wet mixture is not particularly limited, and examples thereof include glycerin and the like.

Also, the lubricant to be mixed in the wet mixture is not particularly limited, and examples thereof include polyoxyalkylene compounds such as polyoxyethylene alkyl ether, polyoxypropylene alkyl ether, and the like. Specific examples of the lubricant include polyoxyethylene monobutyl ether, polyoxypropylene monobutyl ether, and the like.

Also, in some cases, the plasticizer or lubricant may not be mixed in the wet mixture.

Also, when preparing the wet mixture, it is acceptable to use a dispersant solution such as water, organic solvents such as benzene, and alcohol such as methanol.

Further, it is also acceptable to add a forming auxiliary to the wet mixture.

The forming auxiliary is not particularly limited, and examples thereof include ethylene glycol, dextrin, fatty acids, fatty acid soap, polyalcohol, and the like.

Further, it is acceptable to add balloons, which are fine hollow spheres containing oxide ceramic as a component, and a pore-forming agent such as spherical acrylic particles or graphite to the wet mixture, if necessary.

The balloons are not particularly limited, and examples thereof include alumina balloons, glass micro balloons, shirasu balloons, fly ash balloons (FA balloons), mullite balloons, and the like. Alumina balloons are preferable out of these.

The plug material paste for sealing the cells is not particularly limited, and the plug, manufactured in the subsequent process, preferably has a porosity of 30 to 75%. For example, it is possible to use a paste-like material, which is the same material as the wet mixture.

A catalyst for converting exhaust gases may be supported on the honeycomb structured body according to the embodiments of the invention and the disclosure, and the catalyst to be supported is desirably noble metals such as platinum, palladium, and rhodium. Out of these, platinum is more desirably used. Moreover, alkali metals such as potassium and sodium, or alkali-earth metals such as barium may be used as other catalysts. Each of these catalysts may be used alone, or two or more kinds of these may be used in combination.

In the combining process in the method for manufacturing the honeycomb structured body of each of the embodiments of the invention and the disclosure, instead of the method in which an adhesive paste is applied to a side face of each honeycomb fired body, for example, a method may be used in which, with each of honeycomb fired bodies being temporarily secured in a mold frame having almost the same shape as the shape of a ceramic block (or an aggregated body of honeycomb fired bodies) to be manufactured, an adhesive paste is injected between each of the honeycomb fired bodies.

Each of the honeycomb structured body according to the embodiments of the invention and the disclosure may also have the characteristics of other inventions.

For example, in addition to the above characteristic, the honeycomb structured body according to the embodiments of the disclosure may have the following characteristics, that is: provided that a figure, which is similar to the shape of the ceramic block in the cross section and is concentric with the shape of the ceramic block in the cross section, is drawn in the cross section with an area ratio of the figure being 49% to the area of the ceramic block in the cross section, a part of each of the peripheral-portion honeycomb fired bodies is necessarily located in the figure; the honeycomb structured body comprises the first peripheral-portion adhesive layer and the second peripheral-portion adhesive layer, and at least one of the first peripheral-portion adhesive layers and the second peripheral-portion adhesive layer form an angle of 40 to 50°; or the cross-sectional area of the ceramic block and the number of the adhesive layers existing on a route which extends from the center of gravity of the ceramic block to the periphery of the ceramic block in the cross section satisfy the predetermined relationships.

BRIEF DESCRIPTION OF THE DRAWINGS

Fig. 1 is a perspective view schematically showing a honeycomb structured body according to the first embodiment of the disclosure.
Fig. 2 (a) is a perspective view schematically showing a center-portion honeycomb fired body in the honeycomb structured body according to the first embodiment of the disclosure, and Fig. 2 (b) is an A-A line cross-sectional view of the honeycomb fired body shown in Fig. 2(a).
Fig. 3 is a perspective view schematically showing a peripheral-portion honeycomb fired body according to the first embodiment of the disclosure.
Fig. 4 is a cross-sectional view of a honeycomb structured body manufactured in Example 1-1.
Fig. 5 is a cross-sectional view of a honeycomb structured body manufactured in Comparative Example 1-1.
Fig. 6 is a cross-sectional view of a honeycomb structured body according to the second embodiment of the disclosure.
Figs. 7 (a) and 7 (b) are cross-sectional views for describing another example of a method for manufacturing a honeycomb structured body according to the third embodiment of the disclosure.
Fig. 8 is a cross-sectional view of a honeycomb structured body according to another embodiment of the disclosure.
Fig. 9 is a cross-sectional view of a honeycomb structured body according to another embodiment of the disclosure.
Fig. 10 is a cross-sectional view of a honeycomb structured body according to another embodiment of the disclosure.
Fig. 11 is a perspective view schematically showing a honeycomb structured body according to the first embodiment of the invention.
Fig. 12 is an A-A line cross-sectional view of the honeycomb structured body shown in Fig. 11.
Fig. 13 is a cross-sectional view of a honeycomb structured body manufactured in Comparative Example 4-1.
Fig. 14 is a cross-sectional view of a honeycomb structured body according to the second embodiment of the invention.
Fig. 15 is a cross-sectional view of a honeycomb structured body manufactured in Comparative Example 4-2.
Fig. 16 is a cross-sectional view of a honeycomb structured body according to the third embodiment of the invention.
Figs. 17 (a) and 17(b) are cross-sectional views for describing another example of a method for manufacturing a honeycomb structured body according to the third embodiment of the invention.
Fig. 18 is a cross-sectional view of a honeycomb structured body manufactured in Comparative Example 4-3.

EXPLANATION OF SYMBOLS

100, 200, 500, 600, 700, 3100, 3200, 3300 Honeycomb structured body
101, 201, 301, 501, 601, 701, 3101, 3201, 3301, 3601 Adhesive layer
102, 202, 502, 602, 702, 3102, 3202, 3302 Coat layer
103, 203, 303, 503, 603, 703, 3103, 3203, 3303, 3603 Ceramic block
110, 210, 310, 510, 610, 710, Center-portion honeycomb fired body
120, 220, 230, 320, 520, 530, 540, 620, 630, 640, 720, Peripheral-portion honeycomb fired body
3110, 3120, 3210, 3220, 3230, 3310,3320, 3330, 3340, 3610, 3620, 3630, 3640 Honeycomb fired body
111, 121 Cell
112, 122 Plug
113, 123 Cell wall

**Claims**

1. A honeycomb structured body (3100, 3200, 3300) comprising:

    a ceramic block (3103, 3203, 3303, 3603) in which
    a plurality of pillar-shaped honeycomb fired bodies (3110, 3120, 3210, 3220, 3230, 3310, 3320, 3330, 3340, 3610, 3620, 3630, 3640) are combined with one another with an adhesive layer (3101, 3201, 3301, 3601) interposed therebetween, and
    each of the honeycomb fired bodies (3110, 3120, 3210, 3220, 3230, 3310, 3320, 3330, 3340, 3610, 3620, 3630, 3640) has a large number of cells (111, 121) that are placed in parallel with one another in a longitudinal direction with a cell wall interposed therebetween,
    wherein
    the area of every honeycomb fired body (3110, 3120, 3210, 3220, 3230, 3310, 3320, 3330, 3340, 3610, 3620, 3630, 3640) is 900 to 2500 mm$^2$ in a cross section perpendicular to said longitudinal direction,
    the area of said ceramic block (3103, 3203, 3303, 3603) is 10000 to 55000 mm$^2$ in said cross section, and
    the number of the adhesive layers (3101, 3201, 3301, 3601) existing on a route which passes,through said honeycomb fired bodies (3110, 3120, 3210, 3220, 3230, 3310, 3320, 3330, 3340, 3610, 3620, 3630, 3640) and extends from the center of gravity of said ceramic block to the periphery of said ceramic block (3103, 3203, 3303, 3603) in said cross section is:

        two or less in the case that the area of said ceramic block (3103, 3203, 3303, 3603) in said cross section is 10000 mm$^2$ or more and less than 25000 mm$^2$,
        three or less in the case that the area of said ceramic block (3103, 3203, 3303, 3603) in said cross section is 25000 mm$^2$ or more and less than 40000 mm$^2$, and
        four or less in the case that the area of said ceramic block (3103, 3203, 3303, 3603) in said cross section is 40000 mm$^2$ or more and 55000 mm$^2$ or less,
        wherein said route is decided so as to pass through the smallest number of the adhesive layers.

2. The honeycomb structured body (3100, 3200, 3300) according to claim 1, wherein said ceramic block (3103, 3203, 3303, 3603) has a round shape in said cross section.

**Patentansprüche**

1. Wabenstrukturkörper (3100, 3200, 3300) mit:

    einem Keramikblock (3103, 3203, 3303, 3603), bei dem
    mehrere säulenförmige gebrannte Wabenkörper (3110, 3120, 3210, 3220, 3230, 3310, 3320, 3330, 3340, 3610, 3620, 3630, 3640) miteinander mit einer Klebeschicht (3101, 3201, 3301, 3601), die zwischen diese gelegt wurde, verbunden sind, und
    jeder der gebrannten Wabenkörper (3110, 3120, 3210, 3220, 3230, 3310, 3320, 3330, 3340, 3610, 3620, 3630, 3640) eine große Anzahl an Zellen (111, 121) aufweist, die parallel zueinander in einer Längsrichtung mit einer Zellenwand, die zwischen diese gelegt wurde, angeordnet sind,
    bei dem
    die Fläche jedes gebrannten Wabenkörpers (3110, 3120, 3210, 3220, 3230, 3310, 3320, 3330, 3340, 3610, 3620, 3630, 3640) 900 bis 2.500 mm$^2$ in einem Querschnitt, der senkrecht zu der Längsrichtung ist, ist,
    die Fläche des Keramikblocks (3103, 3203, 3303, 3603) 10.000 bis 55.000 MM$^2$ in diesem Querschnitt ist, und
    die Anzahl der Klebeschichten (3101, 3201, 3301, 3601), die auf einem Weg existieren, der durch die gebrannten Wabenkörper (3110, 3120, 3210, 3220, 3230, 3310, 3320, 3330, 3340, 3610, 3620, 3630, 3640) geht und sich vom Schwerpunkt des Keramikblocks zu dem Umfang des Keramikblocks (3103, 3203, 3303, 3603) in diesem Querschnitt erstreckt, folgendes ist:

        zwei oder weniger im Fall, dass die Fläche des Keramikblocks (3103, 3203, 3303, 3603) in dem Querschnitt 10.000 mm$^2$ oder mehr und weniger als 25.000 mm$^2$ ist,
        drei oder weniger im Fall, dass die Fläche des Keramikblocks (3103, 3203, 3303, 3603) in dem Querschnitt 25.000 mm$^2$ oder mehr und weniger als 40.000 mm$^2$ ist, und
        vier oder weniger in dem Fall ist, dass die Fläche des Keramikblocks (3103, 3203, 3303, 3603) in dem Querschnitt 40.000 mm$^2$ oder mehr und 55.000 mm$^2$ oder weniger ist,

wobei der Weg so gelegt wurde, dass er durch die geringste Anzahl an Klebeschichten geht.

2.  Wabenstrukturkörper (3100, 3200, 3300) nach Anspruch 1, bei dem
    der Keramikblock (3103, 3203, 3303, 3603) eine runde Form in diesem Querschnitt aufweist.

**Revendications**

1.  Corps (3100, 3200, 3300) à structure en nid d'abeilles comprenant:

    un bloc de céramique (3103, 3203, 3303, 3603) dans lequel
    une pluralité de corps (3110, 3120, 3210, 3220, 3230, 3310, 3320, 3330, 3340, 3610, 3620, 3630, 3640) cuits en nid d'abeilles en forme de pilier sont combinés entre eux avec une couche adhésive (3101, 3201, 3301, 3601) intercalée entre eux, et
    chacun des corps (3110, 3120, 3210, 3220, 3230, 3310, 3320, 3330, 3340, 3610, 3620, 3630, 3640) cuits en nid d'abeilles a un grand nombre de cellules (111, 121) qui sont placées parallèlement les unes aux autres dans une direction longitudinale avec une paroi cellulaire intercalée entre elles.
    où
    l'aire de chaque corps (3110, 3120, 3210, 3220, 3230, 3310, 3320, 3330, 3340, 3610, 3620, 3630, 3640) cuit en nid d'abeilles est de 900 à 2500 mm$^2$ dans une section transversale perpendiculaire à ladite direction longitudinale,
    l'aire dudit bloc de céramique (3103, 3203, 3303, 3603) est de 10000 à 55000 mm$^2$ dans ladite section transversale, et
    le nombre de couches adhésives (3101, 3201, 3301, 3601) qui existent sur un chemin qui passe à travers lesdits corps (3110, 3120, 3210, 3220, 3230, 3310, 3320, 3330, 3340, 3610, 3620, 3630, 3640) cuits en nid d'abeilles et qui s'étend du centre de gravité dudit bloc de céramique à la périphérie dudit bloc de céramique (3103, 3203, 3303, 3603) dans ladite section transversale est:

    deux ou moins dans le cas où l'aire dudit bloc de céramique (3103, 3203, 3303, 3603) dans ladite section transversale est de 10000 mm$^2$ ou plus et inférieur à 25000 mm$^2$,
    trois ou moins dans le cas où l'aire dudit bloc de céramique (3103, 3203, 3303, 3603) dans ladite section transversale est de 25000 mm$^2$ ou plus et inférieur à 40000 mm$^2$, et
    quatre ou moins dans le cas où l'aire dudit bloc de céramique (3103, 3203, 3303, 3603) dans ladite section transversale est de 40000 mm$^2$ ou plus et de 55000 mm$^2$ ou moins,
    où ledit chemin est choisi de façon à ce qu'il passe à travers le plus petit nombre de couches adhésives.

2.  Corps (3100, 3200, 3300) à structure de nid d'abeilles selon la revendication 1, où
    ledit bloc de céramique (3103, 3203, 3303, 3603) a une forme ronde dans ladite section transversale.

FIG. 1

FIG. 2

(a)

(b)

A-A line cross-sectional view

FIG. 3

120

120d

122

120a

123    121    120b

120c

FIG. 4

FIG. 5

FIG. 6

FIG. 7

(a)

<u>303′</u>

320′

310

(b)

<u>303</u>

301

320

310

FIG. 8

FIG. 9

FIG. 10

FIG. 11

FIG. 12

EP 2 196 645 B1

FIG. 13

41

FIG. 14

EP 2 196 645 B1

FIG. 15

FIG. 16

FIG. 17

(a)

3603´

3640´

3610´

(b)

3603

3640

3630

3620

3610

3601

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0123069 A1
- JP 2004154718 A
- WO 0496414 A1